# EUROPÄISCHE PATENTSCHRIFT

(11) **EP 2 090 921 B1**
(45) Veröffentlichungstag und Bekanntmachung des Hinweises auf die Patenterteilung: **20.06.2012**
(21) Anmeldenummer: 08151567.8
(22) Anmeldetag: 18.02.2008
(51) Int. Cl.: G02C 1/02, G02C 5/00

(54) **Verfahren zur Herstellung einer randlosen Brille**
Method for manufacturing rimless spectacles
Procédé de fabrication d'une paire de lunette sans branche

(43) Veröffentlichungstag der Anmeldung: 19.08.2009
(73) Patentinhaber: Anger, Wilhelm, 5020 Salzburg (AT)
(72) Erfinder: Anger, Wilhelm, 5020, Salzburg (AT); Reikerstorfer, Herbert, 4240, Freistadt (AT)
(74) Vertreter: TBK

(56) Entgegenhaltungen:
- EP-A- 0 361 547
- EP-A- 1 584 967
- WO-A-2004/096496
- CH-A- 196 011
- DE-A1-102005 006 980
- DE-U1- 9 411 693
- FR-A- 1 293 593
- US-A- 5 550 599

## Beschreibung

Die Erfindung bezieht sich auf ein Verfahren zur Herstellung einer randlosen Brille.

Eine randlose Brille umfasst zwei Brillengläser und eine Brücke, die zwischen den beiden Brillengläsern angeordnet und mit diesen verbunden ist, wobei die Brücke Seitenstege oder einen Sattelsteg trägt oder mit dem Sattelsteg bzw. den Seitenstegen einstückig ausgebildet ist. Ferner umfasst eine randlose Brille zwei Backen, die jeweils mit einem der zwei Brillengläser an einem von der Brücke abgewandten Randbereich des Brillenglases verbunden sind, und zwei Bügel, die jeweils gelenkig mit einer der beiden Backen verbunden sind. Eine solche randlose Brille weist keine entlang den oberen Rändern und/oder den unteren Rändern der Brillengläser verlaufenden Fassungsteile auf, die die Brücke mit den beiden Backen verbinden. Vielmehr wird für den Zusammenhalt zwischen Backen und Brücke durch die dazwischen angeordneten Brillengläser gesorgt. Daher ist es notwendig, die Backen und die Brücke mechanisch hinreichend fest mit den Brillengläsern zu verbinden.

Es ist bekannt, die Verbindung zwischen den Backen und der Brücke einerseits und dem jeweiligen Brillenglas andererseits dadurch herzustellen, dass im Brillenglas am Anbringungsort für die Backen bzw. die Brücke zunächst zumindest ein Durchgangsloch ausgebildet wird. In das Durchgangsloch kann eine Schraube bzw. ein Niet eingesetzt werden, um die Backe bzw. die Brücke mit dem Brillenglas zu verschrauben oder zu vernieten. Bekannt ist es auch, an dem zu befestigenden Bauteil, d.h. an der Backe oder der Brücke, einen Zapfen vorzusehen, der im Durchgangsloch des Brillenglases verklebt oder verdübelt wird. Diese bekannten Verbindungsarten haben den Nachteil, dass in den Brillengläsern Durchgangslöcher ausgebildet werden müssen. Während der Ausbildung der Durchgangslöcher beispielsweise durch Bohren oder Fräsen besteht die Gefahr, dass das Brillenglas bricht, was zu einem beträchtlichen Ausschuss bei der Herstellung solcher randlosen Brillen führt. Ferner verursachen die Durchgangslöcher in den Brillengläsern Spannungen, die eine erhöhte Bruchgefahr beim Gebrauch der Brille zur Folge haben.

Es ist ferner bekannt, bei einer randlosen Brille die Brücke und die Backen mit den Brillengläsern mittels eines Klebstoffes zu verbinden (siehe die Druckschriften DE 9 402 861 U1, FR 2 793 040 B). Bei diesen bekannten randlosen Brillen werden die Brücke und die Backen mit den Rändern der Brillengläser verklebt. Durch dieses Verkleben von Brücke und Backe mit den Brillengläsern soll und kann vermieden werden, dass Durchgangslöcher in den Brillengläsern ausgebildet werden müssen und vorhanden sind, um die Brücke und die Backe mit den Brillengläsern zu verbinden.

Es ist ferner bereits vorgeschlagen worden, bei einer randlosen Brille die Brücke und/oder die Backen mit den Brillengläsern auf deren Vorder- oder Rückseite zu verkleben (siehe die Druckschriften DE 102005006980 A1, US 5 805 259 A, FR 2 624 278 A1 und FR 2 749 088 A1). Wenn die Backen und die Brücke mit der Vorder- oder der Rückseite der Brillengläser verklebt werden, hat dies den Vorteil, dass auf der Vorder- bzw. Rückseite eine größere Fügefläche zum Verkleben zur Verfügung steht als an den Rändern der Brillengläser, die bei Brillengläsern mit hoher Brechzahl schmal sein können. Gemäß der Druckschrift FR 2 749 088 A1 ist vorgesehen, dass der Klebstoff ein durch Strahlung härtbarer Klebstoff ist und dass die Brillengläser an den Anbringungsorten, an denen Verbindungselemente der Backen und der Brücken mit den Brillengläsern verklebt werden sollen, poliert werden, damit die Strahlung, mit deren Hilfe der Klebstoff gehärtet wird, möglichst ungeschwächt zum Klebstoff gelangen kann.

Bisherige Bemühungen, eine randlose Brille dadurch herzustellen, dass die Backen und die Brücke mit der Vorderseite oder der Rückseite der Brillengläser verklebt werden, haben nicht zum Erfolg geführt, weil keine dauerhaft festen Klebeverbindungen erreicht werden konnten und die Klebeverbindungen häufig gebrochen sind.

Der Erfindung liegt die Aufgabe zugrunde, ein Verfahren zur Herstellung einer randlosen Brille zu schaffen, bei dem die Brücke und die Backen mit den Brillengläsern dadurch verbunden werden, dass Brücke und Backen mit der Vorderseite oder der Rückseite der Brillengläser verklebt werden, wobei die Klebeverbindungen dauerhaft fest sein sollen und solche dauerhaft festen Klebeverbindungen zuverlässig und regelmäßig erreicht werden.

Diese Aufgabe wird erfindungsgemäß durch das Verfahren gemäß Patentanspruch 1 gelöst.

Ein Verfahren mit den Merkmalen des Oberbegriffs von Patentanspruch 1 ist beschrieben in der älteren Europäischen Patentanmeldung Nr. 07113025.6, veröffentlicht als EP 2019331 A1.

Das Aufbringen einer Beschichtung auf die Vorderseite und die Rückseite der Brillen-Rohgläser, wie es gemäß Schritt b) von Patentanspruch 1 vorgesehen ist, ist an sich bekannt.

Bei dem erfindungsgemäßen Verfahren wird die Beschichtung an den Anbringungsorten für die Verbindungselemente der Brücke und der Backen abgetragen, um dadurch an den Brillengläsern Fügeflächen auszubilden, an denen die Verklebung mit den Fügeflächen der Backen und der Brücke erfolgt. Durch das Abtragen der Beschichtung an den Anbringungsorten wird im Bereich der Fügeflächen das Grundmaterial der Brillengläser freigelegt. Es ist gefunden worden, dass dann, wenn die Fügeflächen an den Brillengläsern die stoffliche Beschaffenheit von deren Grundmaterial haben, eine dauerhaft feste Klebeverbindung erreicht werden kann.

Ein wesentliches Merkmal der Erfindung besteht in der Verwendung der Maske mit der Öffnung, deren Kontur mit dem Umriss der Fügefläche eines jeweiligen Verbindungselementes zumindest teilweise übereinstimmt, als Hilfsmittel bei dem Abtragen der Beschichtung zur Bildung einer jeweiligen Fügefläche am Brillenglas. Diese Maske wird am Brillenglas lösbar fixiert, und zwar derart, dass ihre Öffnung sich am Anbringungsort für das Verbindungselement befindet und dort die an dem Brillenglas noch zu bildende Fügefläche begrenzt. Die Beschichtung wird dann durch spanabhebende Bearbeitung der Vorderseite bzw. der Rückseite des Brillenglases in dem durch die Öffnung der Maske begrenzten Bereich abgetragen. Die Maske gibt mit ihrer Öffnung somit vor, in welchem Bereich am Brillenglas die Beschichtung zur Bildung der Fügefläche an demselben abzutragen ist, und verhindert ein Abtragen der Beschichtung außerhalb dieses Bereichs. Dadurch wird es insbesondere möglich, die Beschichtung zur Bildung der Fügefläche am Brillenglas manuell abzutragen, das heißt mittels eines von einem Bediener gehaltenen und geführten Werkzeugs.

Das erfindungsgemäße Verfahren hat den grundsätzlichen Vorteil, dass in den Brillengläsern keine Löcher, seien es Durchgangslöcher oder Sacklöcher, und keine Ausnehmungen ausgebildet werden. Dadurch sind die Nachteile vermieden, die durch Bohren oder Fräsen der Brillengläser zur Ausbildung von Löchern oder Ausnehmungen verursacht würden. Weil die Brillengläser nicht gebohrt oder gefräst werden, kann es nicht zum Bruch der Brillengläser durch Bohren oder Fräsen und entsprechendem Ausschuss bei der Brillenherstellung kommen. Aus dem gleichen Grund werden in den Brillengläsern keine Spannungen induziert, die beim Gebrauch der Brille einen Glasbruch zur Folge haben könnten. Die Brillengläser der erfindungsgemäß hergestellten randlosen Brille sind frei von Spannungen.

Ferner hat das erfindungsgemäße Verfahren den Vorteil, dass nach diesem Verfahren eine Brille mit beschichteten Brillengläsern hergestellt werden kann. Das Beschichten der Brillengläser ist heutzutage üblich, um die Oberflächen der Brillengläser mit gewünschten Eigenschaften wie z.B. schmutzabweisenden Eigenschaften und Kratzfestigkeit zu versehen. Dies bedeutet, dass trotz des Verklebens der Verbindungselemente mit der Vorderseite oder der Rückseite der Brillengläser, das aus den im Folgenden erörterten Gründen vorteilhaft ist, nicht auf das Beschichten der Brillengläser verzichtet zu werden braucht.

Ein weiterer Vorteil des erfindungsgemäßen Verfahrens besteht darin, dass die Verbindungselemente der Backen und der Brücke mit der Vorderseite oder der Rückseite der Brillengläser verklebt werden. Auf der Vorderseite bzw. der Rückseite der Brillengläser steht eine ausreichend große Oberfläche für die Ausbildung der Fügeflächen an den Brillengläsern zur Verfügung, so dass die Fügeflächen an den Brillengläsern und den Verbindungselementen von Backen und Brücken ausreichend groß dimensioniert werden können, um eine feste Klebeverbindung zu erreichen. Dies unterscheidet das erfindungsgemäße Verfahren vorteilhaft von denjenigen Verfahren, bei denen die Brücke und die Backen mit den Rändern der Brillengläser verklebt werden, weil die Ränder der Brillengläser häufig schmal sind, insbesondere bei Nicht-Korrektionsbrillen wie z.B. Sonnenbrillen, und bei Korrektionsbrillen, deren Brillengläser eine hohe Brechzahl haben. Weil erfindungsgemäß die Verbindungselemente der Backen und der Brücke mit der Vorderseite oder der Rückseite der Brillengläser verklebt werden, führen von der Brücke oder den Backen zu den Brillengläsern übertragene Kräfte zu geringeren Spannungen in den Brillengläsern, als wenn die Verbindungselemente ausschließlich oder überwiegend mit den Rändern der Brillengläser verklebt werden. Klargestellt sei, dass es bei dem erfindungsgemäßen Verfahren nicht ausgeschlossen ist, dass die Verbindungselemente lediglich zusätzlich auch mit den Rändern der Brillengläser verklebt werden.

In vorteilhafter Ausbildung des erfindungsgemäßen Verfahrens kann vorgesehen sein, dass die Maske nicht nur dazu dient, mit ihrer Öffnung während des Abtragens der Beschichtung am Brillenglas den Bereich zu begrenzen, in dem die Beschichtung abgetragen wird, sondern ferner als Positionierhilfe beim Verkleben des Verbindungselementes mit dem jeweiligen Brillenglas dient. Dabei wird das Verbindungselement mit dem Brillenglas verklebt, während die Maske am Brillenglas noch lösbar fixiert ist, wobei das Verbindungselement in dem durch die Öffnung der am Brillenglas fixierten Maske begrenzten Bereich an das Brillenglas angesetzt wird und in der dadurch gegebenen Relativstellung bezüglich des Brillenglases mit diesem verklebt wird. Der Rand der Öffnung ist sichtbar und lässt erkennen, wo das Verbindungselement anzusetzen ist, führt das Verbindungselement beim Einfügen in die Öffnung und verhindert ein Verrutschen des Verbindungselements während des Abbindens des zum Verkleben benutzten Klebstoffs.

Schließlich bestehen ein wesentliches Merkmal und ein wesentlicher Vorteil des erfindungsgemäßen Verfahrens darin, dass die Beschichtung an den Anbringungsorten abgetragen wird zur Bildung der Fügeflächen an den Brillengläsern. Es ist gefunden worden, dass erst durch diese Maßnahme zuverlässig dauerhaft feste Klebeverbindungen erreicht werden, und zwar unter Verwendung eines Klebstoffs aus der Menge der existierenden, an sich bekannten Klebstoffe.

In vorteilhafter Ausbildung des erfindungsgemäßen Verfahrens kann ferner vorgesehen sein, dass die Backen und die Brücke jeweils gefertigt werden aus einem Grundkörper und dem Verbindungselement bzw. den Verbindungselementen, wobei die Verbindungselemente aus einem flexiblen Kunststoff mit geringer Härte gefertigt werden und der Grundkörper aus einem anderen Werkstoff gefertigt wird als dem der Verbindungselemente. Dies ermöglicht es, den Grundkörper aus einem im Hinblick auf die mechanischen Beanspruchungen der Brille hinreichend festen Werkstoff, einschließlich Metall, zu fertigen und den Verbindungselementen eine Pufferfunktion zu geben, die die Klebschicht zwischen den Fügeflächen vor Stoßbelastungen schützt.

Als besonders geeignet haben sich aliphatisches, thermoplastisches Polyether-Urethan als Werkstoff der Verbindungselemente und Cyanacrylatklebstoff als Klebstoff erwiesen.

Weitere vorteilhafte Ausgestaltungen der Erfindung sind in den abhängigen Ansprüchen definiert.

Das erfindungsgemäße Verfahren ist anwendbar sowohl bei der Herstellung von Korrektionsbrillen als auch bei der Herstellung von Brillen ohne Korrektionswirkung wie beispielsweise Sonnenbrillen.

Die Erfindung wird im Folgenden anhand von Ausführungsbeispielen unter Bezugnahme auf die Zeichnungen näher erläutert. Es zeigen:
- Figur 1: eine perspektivische Ansicht eines ersten Ausfühungsbeispiels einer nach dem erfindungsgemäßen Verfahren hergestellten randlosen Brille;
- Figur 2: eine perspektivische Ansicht einer linken Backe der Brille gemäß Figur 1 von hinten;
- Figur 3: eine schematische Unteransicht, teilweise im Schnitt, des linken Randbereichs des linken Brillenglases der Brille gemäß Figur 1, wobei der Zustand dargestellt ist, den ein mit dem Brillen- glas verklebtes Verbindungselement und ein zugeordneter Grundkörper der Backe einnehmen, bevor sie zusammengefügt werden;
- Figur 4: eine Figur 3 entsprechende Darstellung, wobei der Zustand nach dem Zusammenfügen von Verbindungselement und Grundkörper dargestellt ist;
- Figur 5: eine perspektivische Ansicht des linken Brillenglases der Brille gemäß Figur 1 von vorn mit der daran befestigten linken Backe;
- Figur 6: Schnittdarstellungen gemäß A-A bzw. B-B in Figur 2;
- Figur 7: ein Blockdiagramm von Verfahrensschritten des erfindungsgemäßen Verfahrens;
- Figur 8: ausschnittsweise einen Schnitt durch ein beschichtetes Brillenglas zur Erläuterung eines Schrittes des erfindungsgemäßen Verfahrens;
- Figur 9: eine perspektivische Ansicht eines Brillen- Rohglases;
- Figur 10: in perspektivischer Darstellung zwei an einer Montageplatte fixierte Brillengläser zur Erläuterung von Schritten des erfindungsgemäßen Verfahrens;
- Figur 11: ausschnittsweise einen Schnitt durch ein Brillenglas zur Erläuterung eines Schrittes des erfindungsgemäßen Verfahrens;
- Figur 12: ausschnittsweise einen Schnitt durch ein Brillenglas zur Erläuterung eines weiteren Schrittes des erfindungsgemäßen Verfahrens;
- Figuren 13 bis 16: Elemente einer Brille gemäß einem zweiten Ausführungsbeispiel einer nach dem erfindungsgemäßen Verfahren hergestellten randlosen Brille;
- Figuren 17 bis 20: Elemente eines dritten Ausführungsbeispiels einer nach dem erfindungsgemäßen Verfahren hergestellten randlosen Brille;
- Figur 21: in perspektivischer Darstellung eine linke Backe einer Abwandlung des dritten Ausführungsbeispiels;
- Figur 22: in Draufsicht eine Maske gemäß einem ersten Ausführungsbeispiel in Verbindung mit einem Brillenglas, an dem die Maske fixiert ist;
- Figur 23: die Maske gemäß Figur 22 in schematischer Darstellung und in Ansicht gemäß C in Figur 22;
- Figur 24: in ähnlicher Darstellung wie in Figur 22 eine Draufsicht auf ein zweites Ausführungsbeispiel der Maske;
- Figur 25: in ähnlicher Darstellung wie in Figur 22 eine Draufsicht auf ein drittes Ausführungsbeispiel der Maske;
- Figur 26: eine Öffnung der Maske gemäß Figur 25 in Draufsicht und vergrößerter Darstellung;
- Figur 27: eine perspektivische, ausschnittsweise Darstellung eines Verbindungselementes und der Maske gemäß Figur 25;
- Figur 28: in Draufsicht ein viertes Ausführungsbeispiel der Maske, bei der es sich um eine Abwandlung der Maske gemäß Figur 25 handelt; und
- Figur 29: in ähnlicher Darstellung wie in Figur 22 eine Draufsicht auf ein fünftes Ausführungsbeispiel einer Maske.

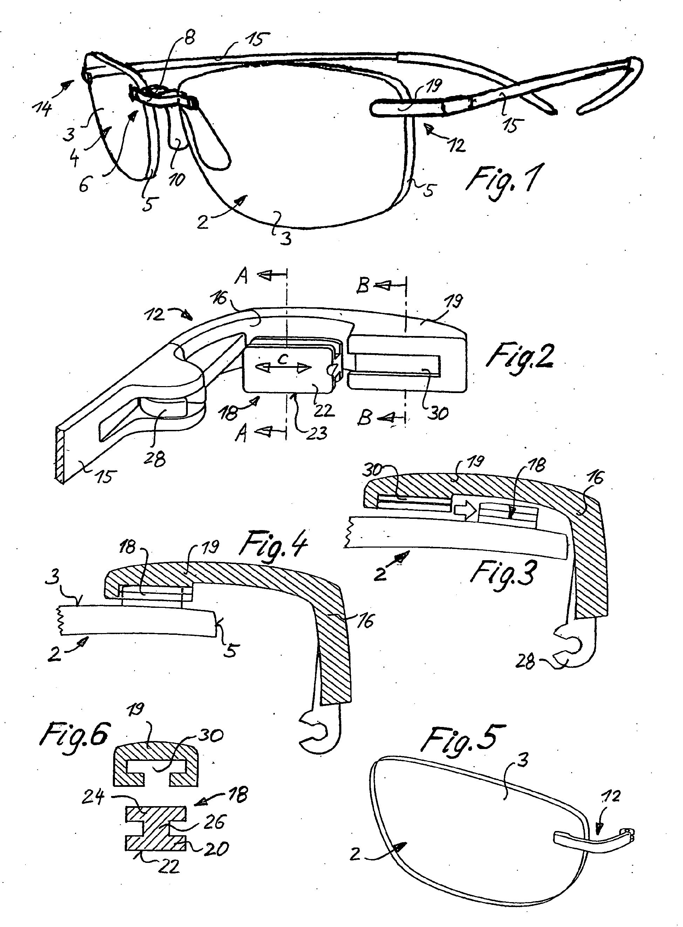

Im Folgenden wird zunächst anhand der Figuren 1 bis 6 ein erstes Ausführungsbeispiel einer erfindungsgemäß hergestellten randlosen Brille erläutert.

Figur 1 zeigt diese Brille in perspektivischer Ansicht von schräg vorn. Die Brille umfasst ein linkes Brillenglas 2, ein rechtes Brillenglas 4 und eine zwischen den beiden Brillengläsern angeordnete Brücke 6. Jedes der beiden Brillengläsern 2 und 4 hat eine in Figur 1 sichtbare Vorderseite 3, eine in Figur 1 nicht sichtbare Rückseite und einen umlaufenden Rand 5, der das Brillenglas radial außen, bezogen auf seine geometrischen und optischen Mittelpunkte, begrenzt. Die Brücke 6 ist ein langgestrecktes Element, das zwischen den beiden Brillengläsern 2 und 4 angeordnet ist und diese miteinander verbindet. Die Brücke 6 besteht aus einem Grundkörper 8 und zwei in Figur 1 nicht dargestellten Verbindungselementen, die jeweils an einem Ende der Brücke 6 angeordnet sind und mit der in Figur 1 sichtbaren Vorderseite 3 des Brillenglases 2 bzw. 4 verklebt sind. Ein Stegbauteil 10 ist an der Brücke 6 befestigt und dient zur Abstützung der Brille an der Nase des Brillenträgers.

Die Brille weist ferner eine linke Backe 12 und eine rechte Backe 14 auf. Die Backen 12 und 14 sind jeweils mit einem Bügel 15 derart gelenkig verbunden, dass die Bügel 15 aus ihren in Figur 1 dargestellten geöffneten Stellungen geschwenkt werden können in Stellungen, in denen sie im Wesentlichen parallel zu den beiden Brillengläsern 2 und 4 verlaufen.

Die Backen 12 und 14 sind jeweils an einem von der Brücke 6 abgewandten Randbereich des Brillenglases 2 bzw. 4 mit diesem verbunden. Jede der beiden Backen 12 und 14 besteht aus einem Grundkörper 16 und einem Verbindungselement 18 (siehe Figur 2), wobei der Grundkörper 16 einen Schenkel 19 aufweist, der auf der Vorderseite 3 des zugeordneten Brillenglases 2 bzw. 4 angeordnet ist. Beim dargestellten Ausführungsbeispiel bestehen der Grundkörper 8 der Brücke 6 und der Grundkörper 16 der Backen 12 und 14 jeweils aus einem spritzgegossenen Kunststoff, beispielsweise aus einem Polyamid, wie es beispielsweise unter der Bezeichnung Trogamid von der Firma Degussa AG oder unter der Bezeichnung Grilamid von der Firma Ems-Chemie AG vertrieben wird, oder aus einem Polyetherimid, wie es beispielsweise von der Firma GE Plastics unter der Bezeichnung Ultem vertrieben wird.

Figur 2 zeigt in perspektivischer Ansicht die linke Backe 12 und deren Verbindungselement 18, das zum Verbinden der Backe 12 mit dem Brillenglas 2 und somit zum Befestigen der Backe 12 am Brillenglas 2 dient. Das Verbindungselement 18 und der Grundkörper 16 sind Elemente, die zunächst getrennt voneinander gefertigt werden und im Zuge der Herstellung der Brille miteinander verbunden werden.

Das Verbindungselement 18 besteht aus einem spritzgegossenen Kunststoff, beispielsweise einem aliphatischen, thermoplastischen Polyether-Polyurethan, wie es beispielsweise von der Firma Bayer AG Bayer Polymers unter der Bezeichnung Texin DP7-3007 vertrieben wird, das eine Härte von 50 bis 55 Shore D hat. Das Verbindungselement 18 hat im Wesentlichen die Form eines Quaders und umfasst eine Platte 20 mit einer Grundfläche 22, einen länglichen Kopf 24 und einen länglichen Steg 26, der die Platte 20 und den Kopf 24 miteinander verbindet. Der Kopf 24 hat in einem zu seiner Längsrichtung C senkrechten Querschnitt das in Figur 6 gezeigte Kopfprofil, bei dem es sich um ein sogenanntes Hammerkopfprofil handelt. Die Grundfläche 22 der Platte 20 des Verbindungselementes 18 bildet dessen Klebe- bzw. Fügefläche, d.h. diejenige Oberfläche, die mit einer komplementären Fügefläche auf der Vorderseite 3 des Brillenglases mittels eines Klebstoffes verklebt wird. Die Grundfläche 22 und somit die Fügefläche weist einen Umriss 23 auf, der die Fügefläche einschließt und begrenzt.

An ihrem dem Bügel 15 zugewandten Ende weist die Backe 12 ein Gelenkauge 28 auf, das in Eingriff mit einem (nicht gezeigten) Gelenkzapfen steht, der am Bügel 15 ausgebildet ist, so dass das Gelenkauge 28 und der Gelenkzapfen ein Gelenk in Form eines Scharniers bilden, in dem die Backe 12 und der Bügel 15 gelenkig miteinander verbunden sind.

Auf der in Figur 2 sichtbaren Rückseite des Schenkels 19 des Grundkörpers 16 der Backe 12 ist im Schenkel 19 eine Nut 30 ausgebildet, deren Nutprofil komplementär zum Kopfprofil des Kopfes 24 geformt ist. Die Nut 30 ist an ihrem dem freien Ende des Schenkels 19 zugewandten Ende geschlossen und an ihrem anderen Ende offen, so dass der Kopf 24 des Verbindungselementes 18 in die Nut eingeschoben werden kann.

Im Zuge der Herstellung der Brille wird das Verbindungselement 18 an einem vorgewählten Anbringungsort im Randbereich des Brillenglases 2 mit dessen Vorderseite 3 verklebt. Das Verkleben des Verbindungselementes 18 mit dem Brillenglas 2 wird weiter unten ausführlicher erläutert. Figur 3 zeigt das Verbindungselement 18, nachdem es mit dem Brillenglas 2 verklebt worden ist. Ferner zeigt Figur 3 den Grundkörper 16 der Backe 12 in derjenigen Relativstellung bezüglich des Brillenglases 2 und des Verbindungselements 18, die der Grundkörper 16 unmittelbar vor dem Zusammenfügen mit dem Verbindungselement 18 einnimmt. Das Zusammenfügen erfolgt in der Weise, dass der Grundkörper 16 aus seiner in Figur 3 gezeigten Stellung in Richtung des in Figur 3 gezeigten Pfeils auf das Verbindungselement 18 geschoben wird, wobei der Kopf 24 in die Nut 30 eintritt. Der Grundkörper 16 wird soweit auf das Verbindungselement 18 geschoben, dass das Verbindungselement 18 und der Grundkörper 16 ihre in Figur 4 gezeigte Relativstellung einnehmen, in der der Kopf 24 des Verbindungselementes 18 vollständig in die Nut 30 eingesetzt ist. Der Kopf 24 und die Nut 30 sind derart dimensioniert, dass deren Oberflächen zumindest teilweise unter Druck aneinander anliegen, so dass Haftreibung zwischen diesen Oberflächen auftritt und dadurch das Verbindungselement 18 und der Grundkörper 16 durch Kraftschluss miteinander verbunden sind. Diese Verbindung kann zusätzlich mittels eines Klebstoffs gesichert werden.

Nachdem der Grundkörper 16 und das Verbindungselement 18 auf vorstehend beschriebene Weise zusammengefügt worden sind, ergibt sich die in Figur 5 gezeigte Anordnung aus dem linken Brillenglas 2 und der daran befestigten linken Backe 12.

Die rechte Backe 14 ist am rechten Brillenglas in gleicher Weise befestigt, wie es vorstehend für die linke Backe 12 und das linke Brillenglas 2 beschrieben worden ist. Ferner ist auch die Brücke 6 an ihren beiden Enden in gleicher Weise an den inneren Randbereichen der Brillengläser 2 und 4 befestigt, wie dies vorstehend für die linke Backe 12 und den linken Randbereich des linken Brillenglases 2 beschrieben worden ist.

Wie sich aus der vorstehenden Beschreibung ergibt, weisen die Brillengläser 2 und 4 keine Durchgangslöcher, Sacklöcher oder andere Ausnehmungen auf, die gebohrt oder gefräst werden müssen. Die Brücke 6 und die Backen 12 und 14 sind an den Vorderseiten 3 der Brillengläser ausschließlich durch Verkleben der jeweiligen Verbindungselemente mit den Brillengläsern befestigt.

Bei dem beschriebenen Ausführungsbeispiel sind das jeweilige Verbindungselement 18 und der zugehörige Grundkörper 8 bzw. 16 zunächst getrennt gefertigte Elemente. Dies ermöglicht es und ist bei dem beschriebenen Ausführungsbeispiel dazu ausgenutzt, den Grundkörper aus einem anderen Werkstoff herzustellen als dem Werkstoff des zugeordneten Verbindungselementes. Als Werkstoff für den Grundkörper wird zweckmäßigerweise ein Werkstoff gewählt, der im Hinblick auf die mechanischen Beanspruchungen der Brille ausreichende Festigkeit hat. Als Werkstoff für das jeweilige Verbindungselement wird ein Werkstoff gewählt, der weicher und elastischer als der des Grundkörpers ist, damit das Verbindungselement eine Puffer- oder Dämpfungsfunktion hat, die die Klebschicht zwischen den Fügeflächen vor stoßartigen Belastungen schützt und dadurch einem Bruch der Klebeverbindung vorbeugt. Vorzugsweise wird, wie dies bei dem beschriebenen Ausführungsbeispiel der Fall ist, das jeweilige Verbindungselement mit dem Brillenglas verklebt, bevor der Grundkörper der Backe bzw. der Brücke mit dem Verbindungselement verbunden wird. Dies erleichtert das Verkleben des Verbindungselementes mit dem Brillenglas. Die Puffer- bzw. Dämpferfunktion des Verbindungselementes ist jedoch auch dann vorhanden, wenn das Verbindungselement vor dem Verkleben mit dem Brillenglas mit dem Grundkörper verbunden wird oder wenn, wie dies auch möglich ist, im Verlauf der Herstellung der Brücke und der Backen das Verbindungselement am zugehörigen Grundkörper in einem.Spritzgießverfahren angespritzt wird.

Bei dem vorstehend beschriebenen Ausführungsbeispiel sind die Verbindungselemente 18 auf den Vorderseiten 3 der Brillengläser 2 und 4 angeklebt und sind dementsprechend die Schenkel 19 der Backen 12 und 14 sowie die Enden der Brücke 6 auf den Vorderseiten 3 der Brillengläser angeordnet. Abweichend hiervon können die Verbindungselemente 18 jedoch auch auf den Rückseiten der Brillengläser angeklebt sein und die Schenkel der Backen und/oder die Enden der Brücke dementsprechend auf den Rückseiten angeordnet sein. Es wird jedoch bevorzugt, die Verbindungselemente mit den Brillengläsern auf deren Vorderseiten zu verkleben, da bei Brillengläsern mit unterschiedlicher Korrektionswirkung die Unterschiede zwischen den Krümmungen der Vorderseiten geringer sind als die Unterschiede zwischen den Krümmungen der Rückseiten.

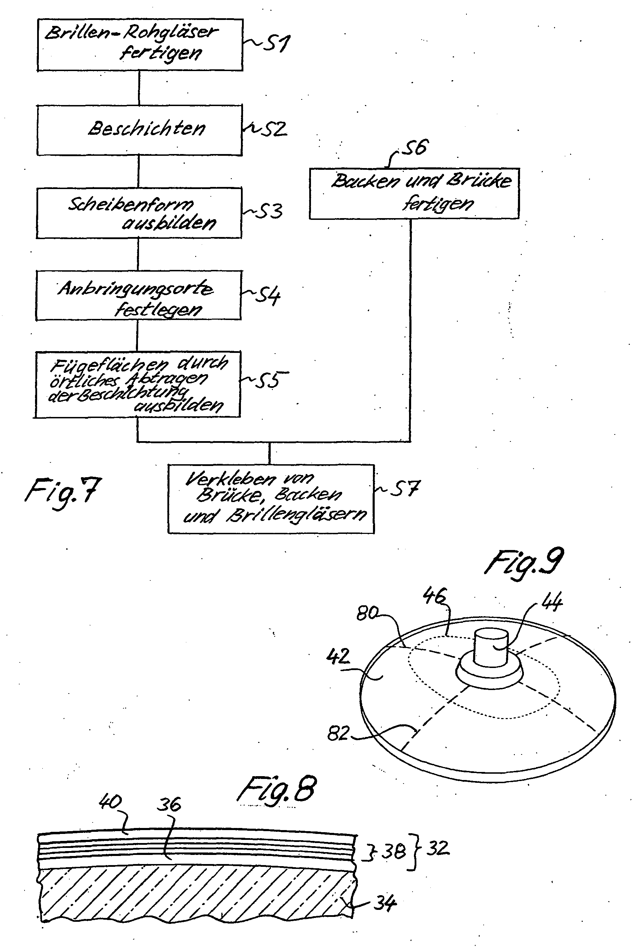

Im Folgenden wird unter Bezugnahme auf die Figuren 7 bis 12 das erfindungsgemäße Verfahren zur Herstellung einer randlosen Brille anhand von Beispielen erläutert. Figur 7 zeigt in Form eines Blockdiagrams die grundsätzlichen Verfahrensschritte, die bei dem erfindungsgemäßen Verfahren ausgeführt werden.

In einem ersten Schritt S1 werden zwei Brillen-Rohgläser aus einem Kunststoff beispielsweise durch Gießen und Pressen hergestellt. Als Kunststoff, d.h. als das Grundmaterial der herzustellenden Brillengläser, kommen die für Brillengläser üblichen Kunststoffe in Frage, wie beispielsweise Polycarbonate und Allyldiglykolkarbonat, das unter der Bezeichnung CR39 als Brillenglaswerkstoff bekannt ist.

In einem darauf folgenden zweiten Schritt S2 wird auf die Vorderseite und die Rückseite jedes Brillen-Rohglases eine Beschichtung aufgebracht. Die Beschichtung 32 besteht üblicherweise aus mehreren Schichten, wie dies in Figur 8 gezeigt ist. Beispielsweise wird zunächst auf das Grundmaterial 34, aus dem die Brillen-Rohgläser bestehen, durch Tauchen eine sogenannte Hartschicht 36 aufgebracht, die für Kratzfestigkeit der Oberflächen (Vorderseite und Rückseite) der Brillengläser sorgen soll. Auf die Hartschicht 36 kann dann durch Aufdampfen eine Entspiegelungsschicht 38 aufgebracht werden, die ihrerseits aus mehreren Schichten bestehen kann. Die Entspiegelungsschicht 38 soll regelmäßige Reflexion unterdrücken. Alternativ kann, wenn ein hoher Reflexionsgrad gewünscht wird, eine Verspiegelungsschicht aufgebracht werden. Als oberste Schicht wird beispielsweise eine Schmutz abweisende Schicht 40 aufgebracht, die hydrophobe und oleophobe Eigenschaften hat und dem Anhaften von Schmutz vorbeugen soll. Die Gesamtdicke der Beschichtung liegt im Bereich von weniger als 1 µm bis zu wenigen Mikrometern.

Im darauf folgenden Schritt S3 wird an den beschichteten Brillen-Rohgläsern die gewünschte Scheibenform ausgebildet. Zu diesem Zweck wird jedes beschichtete Brillen-Rohglas 42, das einen kreisförmigen Rand aufweist, üblicherweise an einem Glashalter 44 befestigt (siehe Figur 9), damit durch Fräsen und Schleifen des Brillen-Rohglases 42 von diesem soviel Material entfernt wird, dass ein Brillenglas mit der gewünschten Scheibenform erhalten wird. Die gewünschte Scheibenform 46 ist in Figur 9 gestrichelt dargestellt. Als Scheibenform wird üblicherweise die geometrische Gestalt des Randes eines Brillenglases bezeichnet. Als Ergebnis des Fräsens und Schleifens des jeweiligen Brillen-Rohglases 42 erhalten beispielsweise die beiden Brillengläser 2 und 4 des vorstehend erläuterten Ausführungsbeispiels die Ränder 5.

Das Brillen-Rohglas 42 und auch das Brillenglas mit der Scheibenform 46 hat eine Mittellinie 80 und eine Scheibensenkrechte 82. Die Mittellinie 80 verläuft durch den (nicht gezeigten) optischen Mittelpunkt des Brillenglases und verbindet die optischen Mittelpunkte der beiden Brillengläser der fertigen Brille. Die Scheibensenkrechte 82 schneidet die Mittellinie 80 senkrecht im geometrischen Mittelpunkt des jeweiligen Brillenglases. Die Mittellinie 80 und die Scheibensenkrechte 82 sind Hilfslinien, die an dem Brillen-Rohglas 42 markiert werden, wobei die entsprechenden Markierungen, wenn sie nicht mehr benötigt werden, entfernt werden und an der fertigen Brille nicht mehr sichtbar sind.

Ferner werden in einem Schritt S6 für jede Brille eine Brücke und zwei Backen gefertigt. Die Brücke und die Backen haben beispielsweise die Gestalt und Beschaffenheit, wie sie vorstehend für das erste Ausführungsbeispiel der Brille beschrieben worden sind. Dabei werden die Verbindungselemente 18 durch Spritzgießen aus einem spritzgießfähigen Kunststoff gefertigt. Wenn, wie dies bei dem ersten Ausführungsbeispiel der Brille der Fall ist, die Grundkörper der Backen und der Brücke ebenfalls aus Kunststoff bestehen, werden auch diese aus einem spritzgießfähigen Kunststoff spritzgegossen. Alternativ können jedoch die Grundkörper auch aus einem metallischen Werkstoff nach üblichen Metallbearbeitungsverfahren gefertigt werden. Bei dem vorstehend beschriebenen ersten Ausführungsbeispiel der Brille werden die Verbindungselemente und die Grundkörper zunächst als getrennte Elemente gefertigt, die erst nach dem Verkleben der Verbindungselemente mit der Vorderseite oder der Rückseite der Brillengläser miteinander kraftschlüssig oder auch formschlüssig verbunden werden. Wie bereits erwähnt wurde, kann diese Verbindung jedoch schon vor dem Verkleben der Verbindungselemente mit den Brillengläsern hergestellt werden. Ferner ist es möglich, die Verbindungselemente an dem jeweils zugehörigen Grundkörper unabhängig davon, ob er aus einem Kunststoff oder einem metallischen Werkstoff besteht, in einem Spritzgießverfahren anzuspritzen und dabei den Grundkörper mit dem Werkstoff des Verbindungselements teilweise oder vollständig zu ummanteln. Schließlich kann jede Brücke einschließlich ihrer beiden Verbindungselemente und jede Backe einschließlich ihres Verbindungselementes einstückig aus einem Kunststoff spritzgegossen werden. In jedem der vorstehend betrachteten Fälle wird an dem jeweiligen Verbindungselement eine im Wesentlichen ebene Fügefläche ausgebildet, die dazu bestimmt ist, mit einer komplementären Fügefläche auf der Vorderseite oder der Rückseite eines der beiden Brillengläsern fest verklebt zu werden. Bei dem vorstehend beschriebenen ersten Ausführungsbeispiel bildet die Grundfläche 22 der Platte 20 des Verbindungselementes 18 eine solche Fügefläche mit dem Umriss 23.

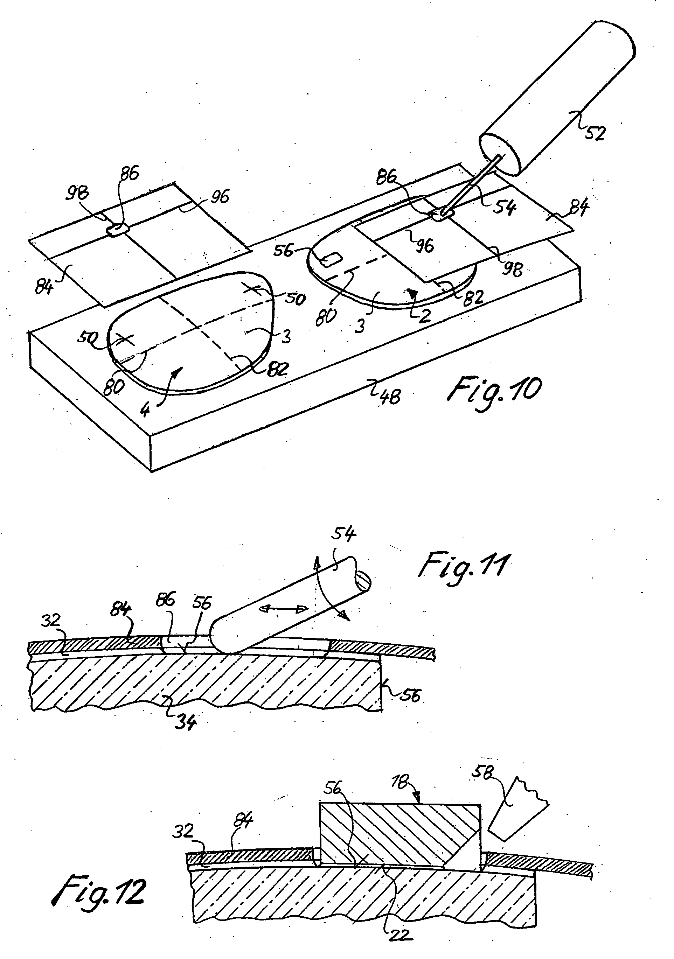

Nachdem die beiden Brillengläser mit ihrer gewünschten Scheibenform, die Brücke einschließlich ihrer beiden Verbindungselemente und die zwei Backen einschließlich ihres jeweiligen Verbindungselementes gefertigt worden sind, werden die Verbindungselemente mit den Vorderseiten der Brillengläser verklebt. Zu diesem Zweck können die beiden Brillengläser 2 und 4 zunächst auf einer Montageplatte 48 beispielsweise mittels nicht dargestellter pneumatischer Haltevorrichtungen fixiert werden, wie dies in Figur 10 gezeigt ist. Dabei nehmen die beiden Brillengläser eine vorgegebene Relativstellung mit vorgegebener Brückenweite zwischen den Brillengläsern ein.

In einem Schritt S4 werden dann die Anbringungsorte für die Verbindungselemente der Backen und der Brücke an den Brillengläsern festgelegt, wobei diese Anbringungsorte bei dem ersten Ausführungsbeispiel auf den Vorderseiten 3 der Brillengläser 2 und 4 liegen. In Figur 10 sind die Anbringungsorte 50 am rechten Brillenglas 4 durch auf das Brillenglas aufgebrachte kreuzförmige Markierungen dargestellt. Jeder Anbringungsort 50 hat vorgegebene Abstände von der Mittellinie 80 und der Scheibensenkrechten 82. Diese Abstände werden vorgegeben in Abhängigkeit von der gewünschten Scheibenform 46 in Verbindung mit dem gewünschten Brillendesign.

In einem nachfolgenden Schritt S5 wird die Beschichtung an den Anbringungsorten bzw. im Bereich der Anbringungsorte durch spanabhebende Bearbeitung abgetragen, um dadurch die Fügeflächen an den Brillengläsern 2 und 4 auszubilden. Der Zweck des Abtragens der Beschichtung besteht darin, das Grundmaterial der Brillengläser freizulegen, damit die jeweilige Fügefläche am Brillenglas die stoffliche Beschaffenheit des Grundmaterials des Brillenglases hat. Dementsprechend wird die Beschichtung im Bereich der auszubildenden Fügefläche vollständig, d.h. bis zur ganzen Dicke der Beschichtung abgetragen. Es ist weder notwendig noch beabsichtigt, dass dabei auch Grundmaterial abgetragen wird. Wenn jedoch zugleich mit dem Abtragen der Beschichtung auch Grundmaterial in geringer Tiefe - in einer Tiefe von wenigen Mikrometern - abgetragen wird, so hat sich dies als unschädlich erwiesen.

Bevor im Schritt S5 die Beschichtung im Bereich der Anbringungsorte abgetragen wird, wird eine Maske 84 mit einer Öffnung 86 am jeweiligen Brillenglas 2 bzw. 4 lösbar fixiert. Eine solche Maske 84 ist in Figur 10 oberhalb des Anbringungsortes 50 für das Verbindungselement der rechten Backe gezeigt. Aus der in Figur 10 gezeigten Stellung wird die Maske 80 bis in Anlage an der Vorderseite des Brillenglases 3 abgesenkt und gegen dieses angedrückt, um die Maske 80 durch Adhäsion am Brillenglas zu fixieren. Dabei wird die Maske 84 am jeweiligen Brillenglas mit einer solchen Relativstellung zwischen Maske 84 und Brillenglas fixiert, dass sich die Öffnung 86 der Maske 84 am zuvor festgelegten und markierten Anbringungsort 50 für das jeweilige Verbindungselement befindet und dort die an dem Brillenglas 2 bzw. 4 noch zu bildende Fügefläche begrenzt.

Die Öffnung 86 in der Maske 84 hat eine Kontur 90, die mit dem Umriss der Fügefläche des jeweiligen Verbindungselementes übereinstimmt. Dies bedeutet beispielsweise im Falle des in Figur 2 gezeigten Verbindungselementes 18, dass die Öffnung 86 eine Kontur 90 hat, die mit dem im Wesentlichen rechteckigen Umriss 23 der durch die Grundfläche 22 des Verbindungselementes 18 gebildeten Fügefläche übereinstimmt, so dass die Öffnung 86 gleiche Form und Größe wie die Fügefläche hat. Klargestellt sei, dass im Rahmen der vorliegenden Beschreibung und Ansprüche die Kontur der Öffnung 86 auch dann als übereinstimmend mit dem Umriss der Fügefläche des Verbindungselementes anzusehen ist, wenn diese Kontur im Wesentlichen mit dem Umriss der Fügefläche übereinstimmt, insbesondere wenn die durch die Kontur begrenzte Öffnung 86 allseits etwas bzw. wenig größer ist als die Fügefläche des Verbindungselementes.

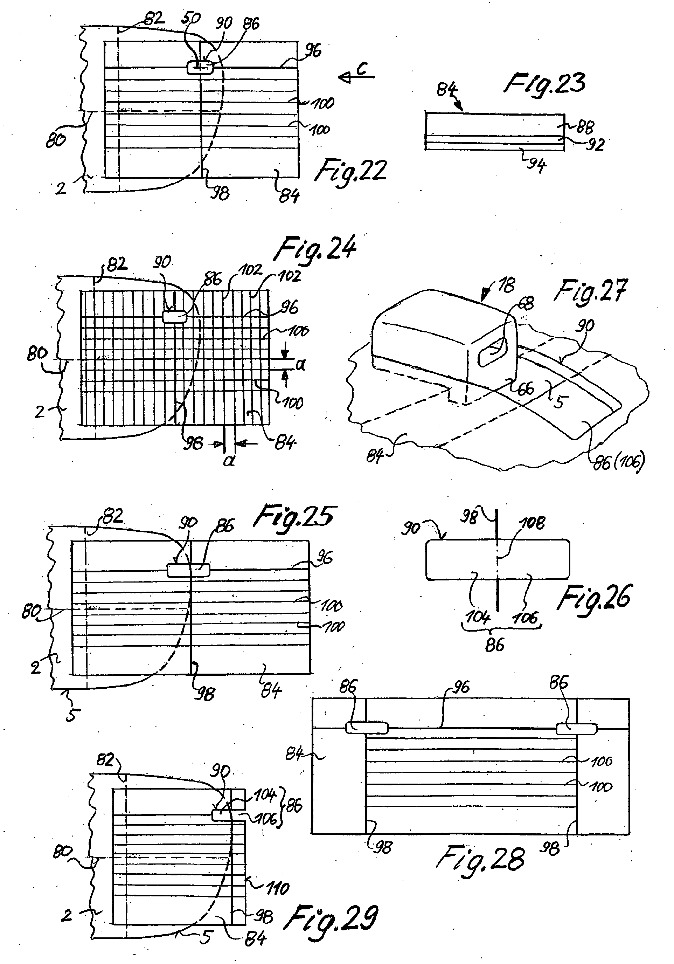

Ein Ausführungsbeispiel der Maske 84 ist in den Figuren 22 und 23 gezeigt, wobei Figur 22 eine Draufsicht auf die Maske 84 in ihrem am Brillenglas 2 fixierten Zustand zeigt. Figur 23 zeigt die Maske 84 in einer Ansicht gemäß C in Figur 22, wobei in Figur 23 die Maske schematisch mit überhöhter Dicke gezeigt ist.

Die Maske 84 besteht im Wesentlichen aus einem biegsamen, rechteckig zugeschnittenen Blatt 88. Bei dem Blatt 88 kann es sich um ein Blatt aus Papier handeln, das mit einem Kunststoff gestrichen, beschichtet oder imprägniert ist und dadurch hinreichend widerstandsfähig ist. Vorzugsweise ist das Blatt 88 durch eine transparente Kunststofffolie gebildet und hat es eine Dicke im Bereich von 0,1 mm bis 0,3 mm, insbesondere eine Dicke von 0,15 mm. Als besonders geeigneter Werkstoff für die Kunststofffolie ist Polycarbonat gefunden worden.

In dem Blatt 88 ist die Öffnung 86 ausgebildet, deren Kontur 90 in vorstehend bereits erläuterter Weise im Wesentlichen mit dem Umriss der Fügefläche eines jeweiligen der Verbindungselemente übereinstimmt.

Die Maske 84 muss lösbar an der Vorderseite bzw. Rückseite des Brillenglases fixierbar sein. Zu diesem Zweck hat eine Oberfläche des Blattes 88 Adhäsionseigenschaften. Bei dem in den Figuren 22 und 23 dargestellten Ausführungsbeispiel ist das Blatt 88 mit einer Haftklebstoffschicht 92 versehen, die für die Adhäsionseigenschaften der einen Oberfläche des Blattes 88 sorgt. Eine Abdeckfolie 94 bedeckt die Haftklebstoffschicht 92. Bevor die Maske 84 am jeweiligen Brillenglas 2 bzw. 4 fixiert wird, wird die Abdeckfolie 94 von der Haftklebstoffschicht 92 abgezogen, und die Abdeckfolie 94 ist nur bis zu diesem Zeitpunkt ein Bestandteil der Maske 84.

Das Blatt 88 und somit die Maske 84 ist mit einer horizontalen Markierungslinie 96 und einer dazu senkrechten Markierungslinie 98 versehen. Diese beiden Markierungslinien 96 und 98 schneiden sich in der Mitte der Öffnung 86 und erleichtern es, die Öffnung 86 der Maske 84 während des Fixierens derselben am Brillenglas 2 bzw. 4 derart anzuordnen, dass sich die den Anbringungsort 50 für das jeweilige Verbindungselement bezeichnende Markierung in der Mitte der Öffnung 86 befindet, wie dies in Figur 22 gezeigt ist. Dabei wird als horizontale Markierungslinie 96 diejenige Linie bezeichnet, die, nachdem die Maske 84 am Brillenglas 2 bzw. 4 befestigt worden ist, parallel zur Mittellinie 80 des Brillenglases verlaufen soll. Um diese parallele Ausrichtung und somit die korrekte Positionierung der Öffnung 86 am Brillenglas 2 bzw. 4 zu erleichtern, weist die Maske ferner eine Anordnung aus zueinander und zu der horizontalen Markierungslinie 96 parallelen Bezugslinien 100 auf, die vorzugsweise voneinander gleiche Abstände haben.

Wenn die Maske 84 in vorstehend beschriebener Weise beispielsweise am Brillenglas 2 fixiert worden ist, begrenzt sie an diesem denjenigen Bereich, in dem die Fügefläche am Brillenglas gebildet werden soll. Dies ist in den Figuren 22 und 10 beispielhaft für die Brillenglas-Fügefläche für das Verbindungselement der linken Backe gezeigt. Mittels der Maske 84 und ihrer Öffnung 86 werden somit die Gestalt und Größe der am Anbringungsort 50 auszubildenden Fügefläche definiert. Außerhalb des durch die Öffnung 86 begrenzten Bereichs deckt die Maske 84 das jeweilige Brillenglas ab.

Das Abtragen der Beschichtung im Schritt S5 erfolgt dann durch spanabhebende Bearbeitung der Vorderseite 3 bzw. der Rückseite des Brillenglases in dem durch die Öffnung 86 der am Brillenglas lösbar fixierten Maske 84 begrenzten Bereich. Dabei verhindert die Maske 84 ein Abtragen der Beschichtung außerhalb dieses Bereichs.

Zum Abtragen der Beschichtung durch spanabhebende Bearbeitung eignet sich grundsätzlich jedes Verfahren, mittels dessen die Beschichtung im Wesentlichen beschränkt auf die Dicke derselben abgetragen werden kann. Die spanabhebende Bearbeitung kann mittels eines Werkzeugs mit geometrisch unbestimmter Schneide, beispielsweise mittels eines Schleifwerkzeugs, oder mittels eines Werkzeugs mit geometrisch bestimmter Schneide erfolgen, also beispielsweise mittels eines Fräswerkzeugs oder eines Schabewerkzeugs.

Als vorteilhaft hat es sich erwiesen, die Beschichtung abzutragen mittels eines Schleifwerkzeugs, das eine hochfrequente Drehbewegung oder Hin- und Herbewegung mit einer Frequenz im Bereich von 24 bis 30 kHz ausführt. Dies ist schematisch in den Figuren 10 und 11 gezeigt. Eine Schleifvorrichtung umfasst eine Antriebseinheit 52 mit einem Motor und ein von der Antriebseinheit 52 getragenes Schleifwerkzeug 54 in Form eines Schleifstiftes mit einem Schleifkörner tragenden Kopf. Die Schleifvorrichtung wird beispielsweise manuell von einem Bediener gehalten und geführt. Die Antriebseinheit 52 dreht das Schleifwerkzeug 54 mit einer Frequenz von beispielsweise 28 kHz einsinnig oder abwechselnd hin und her. Der Kopf des Schleifwerkzeugs 54 wird innerhalb des durch die Öffnung 86 begrenzten Bereichs an die Vorderseite 3 des Brillenglases 2 angesetzt, dort leicht angedrückt und über den gesamten von der Öffnung 86 begrenzten Bereich bewegt. Dabei kann der Rand der Öffnung 86 als Führung genutzt werden. Auf diese Weise ergibt sich schließlich am Brillenglas eine Fügefläche, die in Form und Abmessungen der Öffnung 86 gleicht und somit in Form und Abmessungen mit der Fügefläche des jeweiligen Verbindungselementes übereinstimmt, da die Kontur 90 der Öffnung 86 mit dem Umriss der Fügefläche des Verbindungselementes übereinstimmt. Die das Brillenglas außerhalb des durch die Öffnung 86 begrenzten Bereichs abdeckende Maske 84 verhindert, dass außerhalb dieses Bereichs die Beschichtung abgetragen wird, wenn der Bediener das Schleifwerkzeug 54 über den Rand der Öffnung 86 hinaus bewegen sollte. Eine solche Bewegung über den Rand der Öffnung 86 hinaus wird ohnehin durch den Rand behindert.

Es hat sich gezeigt, dass dann, wenn die Beschichtung in vorstehend beschriebener Weise durch Schleifen mit hoher Frequenz abgetragen wird, homogene Fügeflächen mit mikroskopischer Rauheit ausgebildet werden können, ohne dass Spannungen im Grundmaterial der Brillengläser erzeugt werden. Bei dem Schleifen mit hoher Frequenz werden die Brillengläser nicht in Schwingungen versetzt wodurch einer Welligkeit der Fügeflächen vorgebeugt ist.

Abweichend vom vorstehend beschriebenen Abtragen der Beschichtung unter Verwendung einer Schleifvorrichtung, deren Schleifwerkzeug von der Antriebseinheit angetrieben wird, kann die zum Abtragen der Beschichtung erforderliche Relativbewegung zwischen dem Schleifwerkzeug - oder einem anderen zur spanabhebenden Bearbeitung geeigneten Werkzeug - und der Vorderseite bzw. Rückseite des Brillenglases ausschließlich vom Bediener bewirkt werden. Mit anderen Worten, das Abtragen kann rein manuell erfolgen. In diesem Fall ist beispielsweise das Schleifwerkzeug 54 nicht mit der Antriebseinheit 52, sondern lediglich mit einem Griff versehen. Der Bediener hält das Schleifwerkzeug 54 mittels des Griffes und führt alle zum Abtragen der Beschichtung erforderlichen Bewegungen von Hand aus.

Nachdem im Schritt S5 alle benötigten Fügeflächen durch spanabhebende Bearbeitung unter Verwendung der Maske 84 ausgebildet worden sind und nachdem im Schritt S6 die Backen und die Brücke gefertigt worden sind, werden im Schritt S7 die Verhinderungselemente der Brücke und der Backen mit den Brillengläsern verklebt.

Es hat sich als zweckmäßig erwiesen, die Fügeflächen der Verbindungselemente, also beispielsweise die Grundfläche 22 der Verbindungselemente 18 des ersten Ausführungsbeispiels der Brille, vor dem Verkleben aufzurauen. Alternativ zu einem mechanischen Aufrauen durch Anschleifen, kann die Klebefreudigkeit der Verbindungselemente dadurch erhöht werden, dass deren Fügeflächen mit Aceton vorbehandelt werden, indem diese mit einem mit Aceton getränkten Schwamm oder dergleichen überstrichen werden.

Während des Verklebens können die Brillengläser 2 und 4 mit den daran ausgebildeten Fügeflächen an der Montageplatte 48 fixiert bleiben, an der sie zum Zweck der Ausbildung der Fügeflächen fixiert worden sind.

Um die Verbindungselemente mit den Brillengläsern zu verkleben, werden die Verbindungselemente am jeweils zugeordneten Anbringungsort auf den Brillengläsern angeordnet. Dies kann geschehen, nachdem die Maske, mit deren Hilfe die Fügefläche am jeweiligen Anbringungsort ausgebildet worden ist, vom jeweiligen Brillenglas entfernt worden ist. Vorzugsweise wird jedoch die Maske 84 während des Ansetzens,des Verbindungselementes und während des Verklebens mit dem Brillenglas als Positionierhilfe genutzt. Dies heißt mit anderen Worten, dass das jeweilige Verbindungselement 18 mit dem Brillenglas 2 bzw. 4 verklebt wird, während die Maske 84 am Brillenglas noch fixiert ist, wobei das Verbindungselement 18 in dem durch die Öffnung 6 der Maske 84 begrenzten Bereich an das Brillenglas angesetzt wird und in der dadurch gegebenen Relativstellung bezüglich des Brillenglases mit diesem verklebt wird, wie dies in Figur 12 gezeigt ist. Die Öffnung 86 in der Maske 84 gibt somit vor, wo das Verbindungselement anzusetzen ist, und der Rand der Öffnung 86 führt das Verbindungselement während des Ansetzens und verhindert ein Verschieben des Verbindungselementes am Brillenglas während des Verklebens. In diesem Fall wird die Maske 84 erst nach dem Verkleben des Verbindungselementes mit dem Brillenglas von diesem abgezogen bzw. entfernt.

Es ist zwar möglich, den zum Verkleben verwendeten Klebstoff, beispielsweise einen Cyanacrylatklebstoff, auf die Fügefläche des jeweiligen Verbindungselementes 18 oder die Fügefläche 56 am Brillenglas aufzubringen, bevor das Verbindungselement am zugeordneten Anbringungsort angesetzt bzw. angeordnet wird. Bevorzugt wird es jedoch, in der Weise vorzugehen, dass, wie dies in Figur 12 gezeigt ist, zunächst das jeweilige Verbindungselement 18 am zugeordneten Anbringungsort angeordnet und angedrückt wird - und zwar vorzugsweise unter Verwendung der Maske 84 als Positionierhilfe -, bevor der Klebstoff zwischen die Fügefläche 56 am Brillenglas und die Fügefläche am Verbindungselement 18 eingebracht wird. In diesem Fall erfolgt das Einbringen des Klebstoffs mittels einer Dosiervorrichtung, von der in Figur 12 lediglich eine Düse 58 gezeigt ist. Um das Ansetzen der Düse 58 und das Einbringen des Klebstoffs zu erleichtern, kann, wie dies in Figur 12 gezeigt ist, das jeweilige Verbindungselement 18 mit einer Ausnehmung 60 versehen sein. Der in dosierter Menge eingebrachte Klebstoff verteilt sich aufgrund von in dem Spalt zwischen den beiden Fügeflächen wirkenden Kapillarkräften als dünne Klebschicht und bleibt auf den Spaltbereich zwischen den beiden Fügeflächen beschränkt, weil außerhalb dieses Spaltbereichs keine Kapillarkräfte wirken. Aufgrund dieses Effekts und der genauen Dosierung des Klebstoffs wird eine saubere Klebeverbindung erreicht, d.h. eine Klebeverbindung, bei der sich außerhalb des Bereichs, in dem sich die beiden Fügeflächen überdecken, praktisch kein Klebstoff vorhanden ist.

Wie bereits erwähnt, handelt es sich bei dem verwendeten Klebstoff beispiels- und vorzugsweise um einen Cyanacrylatklebstoff, der mittelviskos mit einer Viskosität im Bereich von 120 mPa·s bei 20°C ist oder - vorzugsweise - niedrigviskos mit einer Viskosität im Bereich von 7 mPa·s bei 20°C ist. Die Dauer, während der beim Verkleben das Verbindungselement und das Brillenglas aneinander gepresst werden müssen, beträgt bei diesen Klebstoffen wenige Sekunden, so dass das Verkleben in kurzer Zeit und rationell durchgeführt werden kann.

Nachdem im Schritt S7 auf vorstehend beschriebene Weise alle vier Verbindungselemente 18 mit den beiden Brillengläsern 2 und 4 verklebt worden sind, werden die Verbindungselemente auf die bereits vorstehend bei der Erläuterung des ersten Ausführungsbeispiels beschriebene Weise mit den Grundkörpern der Backen und der Brücke verbunden, so dass ein fertiges Brillenmittelteil, bestehend aus den zwei Brillengläsern, der Brücke und den Backen, vorliegt. Durch Anfügen des Stegbauteils und der Bügel wird die Brille zur fertigen randlosen Brille vervollständigt.

Vorstehend ist beschrieben, dass während der Ausführung der Schritte S4, S5 und S7 die Brillengläser 2 und 4 an der Montageplatte 48 fixiert sind. Abweichend davon können diese Schritte auch durchgeführt werden, ohne dass die Brillengläser 2 und 4 an einer Montageplatte fixiert werden. Während der Ausführung der Schritte S4, S5, und S7 kann jedes der beiden Brillengläser 2 und 4 einzeln von Hand, also manuell gehalten und/oder gegen eine Unterlage gedrückt werden. Weder das Festlegen der Anbringungsorte für die Verbindungselemente auf der Vorderseite oder der Rückseite der Brillengläser, noch das Fixieren der Maske auf denselben erfordert ein vorheriges Fixieren der Brillengläser an einer Montageplatte. Nach dem Fixieren der Maske am jeweiligen Brillenglas definiert die Öffnung der Maske eindeutig den Bereich, in dem zur Bildung der jeweiligen Fügefläche am Brillenglas die Beschichtung abzutragen ist und das jeweilige Verbindungselement anzukleben ist. Daher erfordern auch die Schritte S5 und S7 keine vorherige Fixierung eines der Brillengläser oder beider Brillengläser an einer Montageplatte oder in einer Montagevorrichtung.

Vorstehend ist beschrieben, dass im Schritt S4 die Anbringungsorte für die Verbindungselemente an den Brillengläsern festgelegt werden, bevor die Maske 84 am jeweiligen Brillenglas fixiert wird. Abweichend davon kann vorgesehen sein und ist vorzugsweise vorgesehen, dass schon das Festlegen des Anbringungsortes für ein jeweiligen Verbindungselement am Brillenglas mit Hilfe der Maske 84 erfolgt, so dass es sich erübrigt, vor dem Fixieren der Maske 84 am Brillenglas den Anbringungsort am Brillenglas festzulegen und zu markieren. Dies wird weiter unten anhand von Figur 24 näher erläutert.

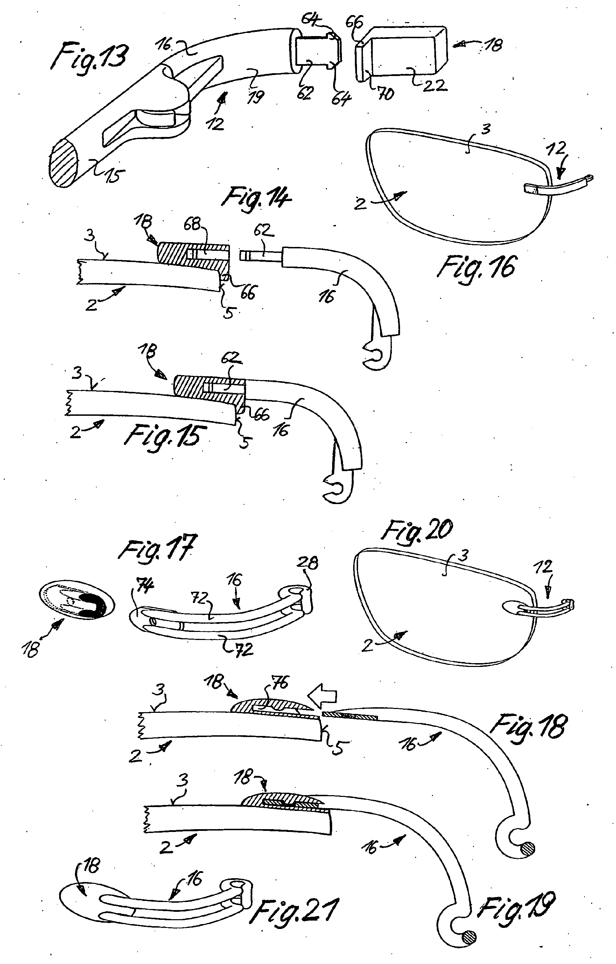

Im Folgenden werden weitere Ausführungsbeispiele von erfindungsgemäß hergestellten randlosen Brille anhand der Figuren 13 bis 20 erläutert. Die Figuren 13 und 17 zeigen jeweils in zu Figur 2 ähnlicher Weise eine perspektivische Ansicht des Grundkörpers 16 und des Verbindungselementes 18 der linken Backe 12 des jeweiligen Ausführungsbeispiels. Die Figuren 14 und 18 zeigen jeweils in zu Figur 3 ähnlicher Weise eine schematische Unteransicht des linken Randbereichs des linken Brillenglases 2, wobei der Zustand dargestellt ist, den das am Brillenglas 2 angeklebte Verbindungselement 18 und der zugeordnete Grundkörper 16 einnehmen, bevor sie zusammengefügt werden. Die Figuren 15 und 19 zeigen jeweils in zu Figur 4 ähnlicher Weise eine Unteransicht, in der der Zustand nach dem Zusammenfügen des Verbindungselementes 18 mit dem Grundkörper 16 dargestellt ist. Die Figuren 16 und 20 zeigen jeweils in zu Figur 5 ähnlicher Weise eine perspektivische Ansicht des linken Brillenglases 2 von vorn mit der daran befestigten linken Backe 12.

Diejenigen Elemente der weiteren Ausführungsbeispiele, die mit Elementen des ersten Ausführungsbeispiels der erfindungsgemäß hergestellten Brille übereinstimmen oder Elementen des ersten Ausführungsbeispiels entsprechen, sind mit denselben Bezugszeichen wie bei dem ersten Ausführungsbeispiel bezeichnet.

Bei dem zweiten Ausführungsbeispiel gemäß den Figuren 13 bis 16 ist der Grundkörper 16 der Backe 12 ein spritzgegossenes Kunststoffteil, das ähnlich wie der Grundkörper 16 des ersten Ausführungsbeispiels gestaltet ist. Abweichend von dem ersten Ausführungsbeispiel weist der Grundkörper 16 der Backe bei dem zweiten Ausführungsbeispiel jedoch am freien Ende des Schenkels 19 eine Stirnfläche auf, an der ein Haken 62 mit zwei Rastnasen 64 angeformt ist.

Das Verbindungselement 18 ist ein spritzgegossenes Kunststoffteil und hat im Wesentlichen die Form eines Quaders mit einem daran angeformten, an einem Ende der Grundfläche 22 von dieser vorstehenden Vorsprung 66. Im Verbindungselement 18 ist eine Ausnehmung 68 mit zwei Hinterscheidungen ausgebildet. Die Gestalt der Ausnehmung 68 und ihrer Hinterschneidungen ist der Gestalt des Hakens 62 derart angepasst, dass der Haken 62 mit seinen Rastnasen 64 in die Hinterschneidungen eingreifen bzw. einrasten kann.

Nachdem das Verbindungselement 18 mit dem linken Brillenglas 2 verklebt worden ist, wird es mit dem Grundkörper 16 zusammengefügt, indem der Haken 62 aus der in Figur 14 gezeigten Stellung in die Ausnehmung 68 geschoben wird, bis die Stellung gemäß Figur 15 erreicht ist. Dabei wird das Anschlusselement 18 elastisch aufgeweitet, bis die Rastnasen 64 am Ende des Einschiebevorgangs in die Hinterschneidungen der Ausnehmung 68 eingreifen können, so dass aufgrund dieses Eingriffs eine formschlüssige Rastverbindung hergestellt ist.

Bei diesem zweiten Ausführungsbeispiel weist das Verbindungselement 18 den Vorsprung 66 auf. Dieser umgreift den Rand 5 des Brillenglases 2. Das Verbindungselement 18 ist nicht nur an seiner Grundfläche 22 mit der Vorderseite 3 des Brillenglases 2 verklebt, sondern auch an der Innenseite 70 des Vorsprungs 66 mit dem Rand 5 verklebt. Hierbei handelt es sich jedoch lediglich um eine zusätzliche Verklebung, deren Fügeflächen wesentlich kleiner sind als die Fügeflächen auf der Vorderseite 3 des Brillenglases 2. Um diese zusätzliche Verklebung zu ermöglichen, ist es nicht notwendig, am Rand 5 des Brillenglases eine Beschichtung abzutragen, da dort nach der Ausbildung der Scheibenform ohnehin das Grundmaterial des Brillenglases freiliegt.

Bei dem dritten Ausführungsbeispiel gemäß den Figuren 17 bis 20 ist der Grundkörper 16 der Backe ein aus einem Metall gefertigtes Bauteil, das die in Figur 17 gezeigte Gestalt hat. Der Grundkörper 16 der Backe besteht aus zwei zueinander parallelen, gekrümmten Stäben 72, die an ihren einen Enden unter Bildung des Gelenkauges 28 ineinander übergehen und an ihren anderen Enden fest mit einer ovalen Platte 74 verbunden sind.

Das Verbindungselement 18 des dritten Ausführungsbeispiels ist ein spritzgegossenes Kunststoffteil, das eine ovale Grundfläche und eine gewölbte Oberfläche aufweist, so dass es insgesamt die Gestalt einer ovalen Linse hat. Das Verbindungselement 18 ist an seiner Grundfläche mit der Vorderseite 3 des Brillenglases 2 verklebt und weist einen im Wesentlichen parallel zu seiner Grundfläche verlaufenden Schlitz 76 auf. Gestalt und Abmessungen des Schlitzes 76 sind der Gestalt und den Abmessungen der Platte 74 und der mit diesen verbundenen Enden der Stäbe 72 derart angepasst, dass die Platte 74 in den Schlitz 76 geschoben werden kann, so dass sich die Relativanordnung von Verbindungselement 18 und Grundkörper 16 gemäß Figur 19 ergibt. In dem in Figur 19 gezeigten Zustand greift ein am Verbindungselement 18 ausgebildeter, in dessen Schlitz 76 ragender Vorsprung in ein Loch in der Platte 74, so dass auf diese Weise für eine formschlüssige Verbindung zwischen dem Verbindungselement 18 und dem Grundkörper 16 der Backe gesorgt ist.

Wie die Figuren 18 und 19 zeigen, erstrecken sich bei dem dritten Ausführungsbeispiel die Fügeflächen am Verbindungselement 18 und am Brillenglas 2 bis zu dessen Rand 5.

Während bei dem ersten Ausführungsbeispiel das Verbindungselement 18 auf der dem Brillenglas zugewandten Seite des Schenkels 19 des Grundkörpers 16 angeordnet ist, ist das Verbindungselement 18 bei dem zweiten und dem dritten Ausführungsbeispiel derart ausgebildet, dass es den Haken 62 am Ende des Schenkels 19 bzw. das eine Ende des Grundkörpers 16 vollständig umgibt. Auf diese Weise bildet das Verbindungselement des zweiten Ausführungsbeispiels und des dritten Ausführungsbeispiels jeweils einen Schuh, in den ein Ende des Grundkörpers gesteckt ist. Dieser Schuh wird, analog zu dem Verbindungselement 18 des ersten Ausführungsbeispiels, aus einem flexiblen Kunststoff mit geringerer Härte als der des Werkstoffs des Grundkörpers gefertigt, damit dieser Schuh die bereits vorstehend erörterte Dämpfungs- bzw. Pufferfunktion hat und die Klebschicht der Klebeverbindung vor Stoßbelastungen schützt.

In Abwandlung des dritten Ausführungsbeispiels, bei dem das Verbindungselement 18 und der Grundkörper 16 der Backe 12 zusammengesteckt werden, nachdem das Verbindungselement 18 mit der Vorderseite 3 des Brillenglases 2 verklebt worden ist, kann das Verbindungselement 18 mit gleicher äußerer Gestalt, wie sie in Figur 17 gezeigt ist, am Grundkörper 16 angespritzt werden. Als Ergebnis des Anspritzens ergibt sich dann die in Figur 21 gezeigte Backe 12. Das Verbindungselement 18 und der Grundkörper 16 sind in diesem Fall bereits fest miteinander verbunden, bevor das Verbindungselement 18 mit der Vorderseite 3 des Brillenglases 2 verklebt wird.

Im Hinblick auf das Verfahren zur Herstellung der Brille gemäß dem zweiten Ausführungsbeispiel und dem dritten Ausführungsbeispiel gelten die vorstehenden Erläuterungen zum erfindungsgemäßen Herstellungsverfahren.

Figur 24 zeigt ein weiteres Ausführungsbeispiel der Maske 84, bei dem es sich um eine Abwandlung des Ausführungsbeispiels gemäß den Figuren 22 und 23 handelt. Die Maske 84 dieses Ausführungsbeispiels weist zusätzlich zu der Anordnung aus den zu der horizontalen Markierungslinie 96 parallelen Bezugslinien 100 eine zweite Anordnung aus zueinander parallelen Bezugslinien 102 auf, die senkrecht zu den Bezugslinien 100 der ersten Anordnung und somit parallel zu der senkrechten Markierungslinie 98 verlaufen. Ebenso wie die horizontale Markierungslinie 96 und die dazu parallelen Bezugslinien 100 haben die senkrechte Markierungslinie 98 und die dazu parallelen Bezugslinien 102 einen vorgegebenen Abstand a voneinander, der beispielsweise 2 mm beträgt.

Wie bereits vorstehend angegeben, hat jeder Anbringungsort durch die gewünschte Scheibenform und das gewünschte Brillendesign vorgegebene Abstände von der Scheibensenkrechten 82 und der Mittellinie 80. Die Maske 84 gemäß Figur 24 ermöglicht es, die Maske 84 am jeweiligen Brillenglas in einer solchen Relativstellung bezüglich desselben zu fixieren, dass sich die Mitte der Öffnung 86 der Maske 84 in den für den jeweiligen Anbringungsort vorgegebenen Abständen von der Scheibensenkrechten 82 und der Mittellinie 80 befindet. Wenn beispielsweise der Anbringungsort bzw. dessen Mitte einen Abstand von 8 mm von der Mittellinie 80 haben soll, wird die Maske 84 am Brillenglas derart fixiert, dass sich die Mittellinie 80 mit derjenigen der Bezugslinien 100 deckt, die von der horizontalen Makierungslinie 96 den Abstand 8 mm hat. Wenn beispielsweise der Anbringungsort bzw. dessen Mitte von der Scheibensenkrechten 82 einen Abstand von 16 mm haben soll, wird die Maske 84 derart am Brillenglas fixiert, dass sich diejenige der senkrechten Bezugslinien 102, die einen Abstand von 16 mm von der senkrechten Markierungslinie 98 hat, mit der Scheibensenkrechten 82 deckt. Dementsprechend befindet sich die Öffnung 86 der Maske 84 genau am vorgegebenen Anbringungsort und wird dieser Anbringungsort festgelegt durch das Fixieren der Maske 84 am Brillenglas und mittels der Öffnung 86 der Maske 84. Es erübrigt sich daher, den Anbringungsort am Brillenglas festzulegen und beispielsweise durch eine Markierung zu kennzeichnen, bevor die Maske 84 am Brillenglas fixiert wird.

Bei den Ausführungsbeispielen der Maske 84 gemäß den Figuren 22 bis 24 stimmt die Kontur 90 der Öffnung 86 in der Maske 84 mit dem Umriss der Fügefläche des jeweiligen Verbindungselementes vollständig überein, das heißt entlang dem gesamten Umriss. Abweichend hiervon kann die Öffnung 86 in der Maske 84 derart ausgebildet sein, dass ihre Kontur 90 mit dem Umriss der Fügefläche eines jeweiligen Verbindungselementes nur teilweise übereinstimmt, wobei jedoch ein Abschnitt der Öffnung 86 eine Kontur hat, die mit dem Umriss der Fügefläche des jeweiligen Verbindungselementes vollständig übereinstimmt. Die Figuren 25 bis 27 zeigen ein Ausführungsbeispiel der Maske 84 mit einer solchen Öffnung.

Bei dem Ausführungsbeispiel gemäß den Figuren 25 bis 27 hat die Öffnung 86 eine im Wesentlichen rechteckige bzw. langovale Kontur 90 und umfasst sie einen ersten Abschnitt 104 sowie einen zweiten Abschnitt 106, die an einer Grenzlinie 108 unmittelbar ineinander übergehen. Diese imaginäre Grenzlinie 108 verbindet die beiden durch die Öffnung 86 unterbrochenen Abschnitte der senkrechten Markierungslinie 98. Diese senkrechte Markierungslinie 98 verläuft bei der Maske 84 gemäß diesem Ausführungsbeispiel nicht durch die Mitte der durch Abtragen der Beschichtung innerhalb des durch die Öffnung 86 begrenzten Bereichs zu erzeugenden Fügefläche, sondern entlang einem Rand dieser Fügefläche.

Der erste Abschnitt 104 der Öffnung 86 ist begrenzt durch die Grenzlinie 108 und einen Abschnitt der Kontur 90 der Öffnung 86, nämlich den in Figur 26 links von der Grenzlinie 108 verlaufenden Abschnitt der Kontur 90. Dieser Abschnitt der Kontur 90 und die Grenzlinie 108 bilden somit die Kontur des ersten Abschnitts 104, und diese Kontur des ersten Abschnitts 104 stimmt überein mit dem Umriss der Fügefläche des Verbindungselementes. Dementsprechend stimmt nicht die gesamte Kontur 90 der Öffnung 86 mit dem Umriss der Fügefläche des Verbindungselementes überein, sondern lediglich der genannte Abschnitt der Kontur 90 stimmt mit einem Abschnitt des Umrisses der Fügefläche des Verbindungselementes überein.

Der zweite Abschnitt 106 der Öffnung 86 kann, wie dies in den Figuren 25 und 26 dargestellt ist, bezüglich der Grenzlinie 108 symmetrisch zum ersten Abschnitt 104 geformt sein. Dies ist jedoch nicht zwingend. Da der zweite Abschnitt 106 nicht zur Begrenzung des Bereichs dient, in dem am Brillenglas die Fügefläche durch Abtragen der Beschichtung auszubilden ist, kann der zweite Abschnitt 106 insbesondere allseitig größer sein als der erste Abschnitt 104.

Das Ausführungsbeispiel der Maske 84 gemäß den Figuren 25 bis 27 ist geeignet und bestimmt zur Bildung von solchen Fügeflächen am Brillenglas, die sich bis zu dessen Rand erstrecken. Diese Maske 84 eignet sich daher insbesondere zur Verwendung bei der Herstellung einer Brille, deren Verbindungselemente gemäß dem anhand der Figuren 13 bis 16 erläuterten zweiten Ausführungsbeispiel ausgebildet sind und mit ihrem Vorsprung 66 den Rand des Brillenglases umgreifen. Die Maske 84 gemäß dem vorliegenden Ausführungsbeispiel wird am Brillenglas in der in Figur 25 gezeigten Position so fixiert, dass die Grenzlinie 108 bzw. die vertikale Markierungslinie 98 am Rand 5 des Brillenglases 2 liegt und dass die Bezugslinien 100 parallel zu der Mittellinie 80 verlaufen. Die Positionierung der Maske 84 in Richtung der Scheibensenkrechten 82 erfolgt entweder in der zuvor anhand der Figur 24 erläuterten Weise oder mit Hilfe einer den Anbringungsort bezeichnenden, zuvor aufgebrachten Markierung. Nachdem dann innerhalb des durch den ersten Abschnitt 104 der Öffnung 86 begrenzten Bereichs die Beschichtung des Brillenglases zur Ausbildung der Fügefläche an demselben abgetragen worden ist, wird das Verbindungselement mit dem Brillenglas verklebt, und zwar vorzugsweise bei noch am Brillenglas fixierter Maske 84, wie dies in Figur 27 gezeigt ist. Figur 27 lässt erkennen, dass der zweite Abschnitt 106 der Öffnung 86 es ermöglicht, das Verbindungselement 18, obwohl es über den Rand des Brillenglases hinausragt, mit dem Brillenglas zu verkleben, während die Maske 84 noch am Brillenglas fixiert ist und daher als Positionierhilfe für das Ansetzen des Verbindungselementes 18 dienen kann.

Figur 28 zeigt eine Abwandlung der Maske 84 gemäß Figur 25, wobei sich die Maske 84 gemäß Figur 28 von der Maske 84 gemäß Figur 25 dadurch unterscheidet, dass sie zusätzlich zu der einen Öffnung 86 eine zweite Öffnung 86 aufweist und dass die parallelen horizontalen Bezugslinien 100 sich nur zwischen den beiden senkrechten Markierungslinien 98 erstrecken. Die Maske 84 gemäß Figur 28 ist insgesamt symmetrisch zu einer in Figur 28 senkrecht verlaufenden, nicht dargestellten Symmetrielinie ausgebildet. Diese Maske 84 kann beispielsweise in ihrer Mitte zerschnitten werden, so dass dann zwei Masken erhalten werden, von denen die eine geeignet ist zur Verwendung bei der Ausbildung einer Fügefläche am rechten Rand eines der Brillengläser und die die andere geeignet ist zur Verwendung bei der Ausbildung einer Fügefläche am linken Rand eines der Brillengläser.

Bei den zuvor beschriebenen Ausführungsbeispielen der Maske 84 ist die Kontur 90 der Öffnung 86 eine geschlossene Kontur, das heißt eine durch eine nicht unterbrochene Linie bzw. Kurve gebildete Kontur. Dementsprechend ist bei den zuvor beschriebenen Ausführungsbeispielen die Öffnung 86 ein in dem Blatt 88 bzw. der Maske 84 ausgebildetes Loch. Abweichend hiervon kann die Öffnung 86 als eine von einem Rand der Maske 84 ausgehende und an diesem Rand offene Ausnehmung gebildet sein, wobei dann die Kontur der Öffnung nicht eine geschlossene Kontur, sondern eine offene Kontur ist, das heißt eine Kontur, die durch eine nicht geschlossene Kurve bzw. Linie gebildet ist. Diese Kontur geht in den Rand der Maske 84 über. Figur 29 zeigt ein Ausführungsbeispiel der Maske 84 mit einer Öffnung, die in vorstehend erläuterter Weise ausgebildet ist.

Bei dem in Figur 29 gezeigten Ausführungsbeispiel der Maske 84 handelt es sich um eine Abwandlung der Maske gemäß Figur 25, von der sich die Maske gemäß Figur 29 im Wesentlichen dadurch unterscheidet, dass sich die Öffnung 86 bis zu einem Rand der Maske erstreckt. In Figur 29 ist dies der rechte Rand 110 der Maske 84. Dementsprechend ist die Öffnung 86 am Rand 110 nicht geschlossen und geht die Kontur 90 der Öffnung in den Rand 110 über. Für den ersten Abschnitt 104 gilt die vorstehende Erläuterung des ersten Abschnitts 104 des Ausführungsbeispiels gemäß den Figuren 25 bis 27. Dementsprechend hat der erste Abschnitt 104 der Öffnung 86 der Maske 84 gemäß Figur 29 eine Kontur, die mit dem Umriss der Fügefläche des Verbindungselementes übereinstimmt und somit am Brillenglas denjenigen Bereich begrenzt, in dem die Beschichtung abgetragen wird zur Bildung der Fügefläche am Brillenglas.

Der zweite Abschnitt 106 der Öffnung 86 ist derjenige, in dessen Bereich die Kontur 90 offen ist und in den Rand 110 der Maske 84 übergeht. Der zweite Abschnitt 106 kann in seiner Länge, das heißt in seiner Erstreckung in Richtung der horizontalen Markierungslinie 96, auf Null reduziert sein, so dass dann die Öffnung 86 ausschließlich aus dem ersten Abschnitt 104 besteht und im Bereich der Öffnung 86 der Rand 110 der Maske den Rand 5 des Brillenglases überdeckt und mit diesem zusammenfällt. Vorzugsweise erstreckt sich die Maske 84 jedoch über den Rand 5 des Brillenglases in in Figur 29 dargestellter Weise hinaus, um das Erfassen der Maske 84 beim Fixieren derselben am Brillenglas und beim Entfernen davon zu erleichtern.

## Patentansprüche

1. Verfahren zur Herstellung einer randlosen Brille,
wobei die Brille aufweist
zwei Brillengläser (2, 4), eine zwischen den beiden Brillengläsern (2, 4) angeordnete Brücke (6), die die beiden Brillengläser (2, 4) miteinander verbindet,
zwei Backen (12, 14), die jeweils mit einem der zwei Brillengläser (2, 4) an einem von der Brücke (6) abgewandten Randbereich des Brillenglases verbunden sind, und
zwei Bügel (15), die jeweils gelenkig mit einer der beiden Backen (12, 14) verbunden sind,
wobei das Verfahren die folgenden Schritte aufweist:
a) Fertigen von zwei Brillen-Rohgläsern (42) aus einem Kunststoff;
b) Aufbringen einer Beschichtung (32) auf die Vorderseite (3) und die Rückseite der Brillen-Rohgläser (42);
c) Bearbeiten der Brillen-Rohgläser (42) in der Weise, dass die zwei Brillengläser (2, 4) mit einer gewünschten Scheibenform (46) erhalten werden;
d) Fertigen der zwei Backen (12, 14), wobei jede der Backen ein Verbindungselement (18) mit einer Fügefläche zum Verbinden der Backe (12, 14) mit einem der zwei Brillengläser (2, 4) aufweist;
e) Fertigen der Brücke (6), wobei die Brücke zwei Verbindungselemente (18) mit einer Fügefläche zum Verbinden der Brücke mit den zwei Brillengläsern (2, 4) aufweist;
f) Festlegen der Anbringungsorte (50) für die Verbindungselemente (18) der Backen (12, 14) und der Brücke (6) auf der Vorderseite (3) oder der Rückseite der Brillengläser (2, 4);
g) Abtragen der Beschichtung (32) an den Anbringungsorten (50) zur Bildung von Fügeflächen (56) an den Brillengläsern (2, 4); und
h) Verkleben der Verbindungselemente (18) der Backen (12, 14) und der Brücke (6) mit der Vorderseite (3) bzw. der Rückseite der Brillengläser (2, 4) an den Anbringungsorten (50),
**dadurch gekennzeichnet,**
**dass** vor Schritt g) für ein jeweiliges der Verbindungselemente (18) eine Maske (84) mit einer Öffnung (86), deren Kontur (90) mit dem Umriss (23) der Fügefläche des Verbindungselementes (18) zumindest teilweise übereinstimmt, an den Brillengläsern (2, 4) lösbar fixiert wird,
und zwar derart, dass die Öffnung (86) der Maske (84) sich am Anbringungsort (50) für das Verbindungselement (18) befindet und dort die an dem Brillenglas (2, 4) zu bildende Fügefläche (56) begrenzt, und
**dass** im Schritt g) die Beschichtung (32) abgetragen wird durch spanabhebende Bearbeitung der Vorderseite (3) bzw. der Rückseite des Brillenglases (2, 4) in dem durch die Öffnung (86) der am Brillenglas (2, 4) lösbar fixierten Maske (84) begrenzten Bereich.

2. Verfahren nach Anspruch 1, **dadurch gekennzeichnet, dass** die spanabhebende Bearbeitung durch Schleifen erfolgt.

3. Verfahren nach Anspruch 2, **dadurch gekennzeichnet, dass** die spanabhebende Bearbeitung mittels eines Schleifwerkzeugs (54) erfolgt.

4. Verfahren nach Anspruch 3, **dadurch gekennzeichnet, dass** das Schleifwerkzeug (54) eine hochfrequente Drehbewegung oder Hin- und Herbewegung mit einer Frequenz im Bereich von 15 bis 40 kHz, vorzugsweise im Bereich von 24 bis 30 kHz, ausführt.

5. Verfahren nach Anspruch 1, **dadurch gekennzeichnet, dass** die spanabhebende Bearbeitung durch Fräsen erfolgt.

6. Verfahren nach einem der Ansprüche 1 bis 5, **dadurch gekennzeichnet, dass** im Schritt f) der Anbringungsort (50) für das jeweilige Verbindungselement (18) am Brillenglas (2, 4) festgelegt wird mittels der Öffnung (86) der Maske (84).

7. Verfahren nach einem der Ansprüche 1 bis 6, **dadurch gekennzeichnet, dass** im Schritt h) das Verbindungselement (18) mit dem Brillenglas (2, 4) verklebt wird, während die Maske (84) am Brillenglas (2, 4) lösbar fixiert ist, wobei das Verbindungselement (18) in dem durch die Öffnung (86) der am Brillenglas (2, 4) fixierten Maske (84) begrenzten Bereich an das Brillenglas (2, 4) angesetzt wird und in der **dadurch** gegebenen Relativstellung bezüglich des Brillenglases (2, 4) mit diesem verklebt wird.

8. Verfahren nach Anspruch 7, **dadurch gekennzeichnet, dass** ein Klebstoff in dosierter Menge zwischen die Fügeflächen (56) am Brillenglas (2, 4) und am Verbindungselement (18) eingebracht wird, nachdem das Verbindungselement (18) am Brillenglas (2, 4) angesetzt worden ist.

9. Verfahren nach einem der Ansprüche 1 bis 8, **dadurch gekennzeichnet, dass** die aufgebrachte Beschichtung (32) zumindest eine Hartschicht (36) und eine Schmutz abweisende Schicht (40) umfasst.

10. Verfahren nach Anspruch 9, **dadurch gekennzeichnet, dass** die aufgebrachte Beschichtung (32) ferner eine Entspiegelungsschicht (38) oder eine Verspiegelungsschicht umfasst.

11. Verfahren nach einem der Ansprüche 1 bis 10, **dadurch gekennzeichnet, dass** die Beschichtung (32) an den Anbringungsorten (50) bis zur ganzen Dicke der Beschichtung (32) abgetragen wird.

12. Verfahren nach einem der Ansprüche 1 bis 11, **dadurch gekennzeichnet, dass** die Fügefläche eines jeweiligen Verbindungselementes (18) im Wesentlichen eine Rechteckform hat.

13. Verfahren nach einem der Ansprüche 1 bis 12, **dadurch gekennzeichnet, dass** vor Schritt h) die Fügefläche des jeweiligen Verbindungselementes (18) aufgeraut wird.

14. Verfahren nach einem der Ansprüche 1 bis 12, **dadurch gekennzeichnet, dass** vor Schritt h) die Fügefläche des jeweiligen Verbindungselementes (18) mit Aceton behandelt wird.

15. Verfahren nach einem der Ansprüche 1 bis 14, **dadurch gekennzeichnet, dass** als Klebstoff zum Verkleben ein Cyanacrylatklebstoff verwendet wird.

16. Verfahren nach einem der Ansprüche 1 bis 15, **dadurch gekennzeichnet, dass** die Backen (12, 14) und die Brücke (6) jeweils gefertigt werden aus einem Grundkörper (16) und dem Verbindungselement (18) bzw. den Verbindungselementen (18), wobei der Grundkörper (16) aus einem anderen Werkstoff gefertigt wird als dem Werkstoff des Verbindungselementes (18) bzw. der Verbindungselemente (18).

17. Verfahren nach Anspruch 16, **dadurch gekennzeichnet, dass** die Verbindungselemente (18) aus einem flexiblen Kunststoff mit geringer Härte gefertigt werden.

18. Verfahren nach Anspruch 17, **dadurch gekennzeichnet, dass** die Härte des Kunststoffs im Bereich von 40 bis 60 Shore D liegt.

19. Verfahren nach Anspruch 17 oder 18, **dadurch gekennzeichnet, dass** der Kunststoff ein aliphatisches, thermoplastisches Polyether-Polyurethan ist.

20. Verfahren nach einem der Ansprüche 16 bis 19, **dadurch gekennzeichnet, dass** der Grundkörper (16) und das jeweilige Verbindungselement (18) getrennt gefertigt werden und miteinander durch Kraft- oder Formschluss verbunden werden.

21. Verfahren nach einem der Ansprüche 17 bis 19, **dadurch gekennzeichnet, dass** jedes Verbindungselement (18) mit dem zugehörigen Grundkörper (16) durch Anspritzen des Verbindungselementes (18) in einem Spritzgießverfahren verbunden wird.

22. Verfahren nach einem der Ansprüche 16 bis 21, **dadurch gekennzeichnet, dass** der Grundkörper (16) aus Metall gefertigt wird.

23. Verfahren nach einem der Ansprüche 16 bis 21, **dadurch gekennzeichnet, dass** der Grundkörper (16) aus einem Kunststoff gefertigt wird.

24. Verfahren nach einem der Ansprüche 1 bis 15, **dadurch gekennzeichnet, dass** jede Backe einschließlich ihres Verbindungselementes einstückig aus einem Kunststoff gefertigt wird und dass die Brücke einschließlich ihrer Verbindungselemente einstückig aus einem Kunststoff gefertigt wird.

## Claims

1. Method for manufacturing rimless spectacles, the spectacles having
two spectacle lenses (2, 4), a bridge (6), which is arranged between the two spectacle lenses (2, 4) and connects the two spectacle lenses (2, 4) to each other,
two lugs (12, 14), which are respectively connected to one of the two spectacle lenses (2, 4) at an edge region of the spectacle lens facing away from the bridge (6), and
two side pieces (15), which are respectively connected to one of the two lugs (12, 14) in a hinged manner,
the method comprising the following steps:
a) producing two spectacle lens blanks (42) from a plastic;
b) applying a coating (32) to the front side (3) and the rear side of the spectacle lens blanks (42);
c) machining the spectacle lens blanks (42) in such a way that the two spectacle lenses (2, 4) with a desired lens shape (46) are obtained;
d) producing the two lugs (12, 14), each of the lugs having a connecting element (18) with a joining area for connecting the lug (12, 14) to one of the two spectacle lenses (2, 4),
e) producing the bridge (6), the bridge having two connecting elements (18) with a joining area for connecting the bridge to the two spectacle lenses (2, 4);
f) determining the mounting locations (50) for the connecting elements (18) of the lugs (12, 14) and of the bridge (6) on the front side (3) or the rear side of the spectacle lenses (2, 4);
g) removing the coating (32) at the mounting locations (50) to form joining areas (56) on the spectacle lenses (2, 4); and
h) adhesively bonding the connecting elements (18) of the lugs (12, 14) and of the bridge (6) to the front side (3) or the rear side of the spectacle lenses (2, 4) at the mounting locations (50), **characterized**
**in that**, before step g), for each of the connecting elements (18), a mask (84) with an opening (86), of which the contour (90) coincides at least partially with the outline (23) of the joining area of the connecting element (18), is fixed in a releasable manner on the spectacle lenses (2, 4),
to be precise such that the opening (86) of the mask (84) is situated at the mounting location (50) for the connecting element (18) and, there, bounds the joining area (56) which is to be formed on the spectacle lens (2, 4), and
**in that**, in step g), the coating (32) is removed by virtue of the front side (3) or the rear side of the spectacle lens (2, 4) being machined in the region bounded by the opening (86) of the mask (84), which is fixed in a releasable manner on the spectacle lens (2, 4).

2. Method according to Claim 1, **characterized in that** the machining takes place by grinding.

3. Method according to Claim 2, **characterized in that** the machining takes place by means of a grinding tool (54).

4. Method according to Claim 3, **characterized in that** the grinding tool (54) performs a high-frequency rotating movement or back-and-forth movement at a frequency in the range from 15 to 40 kHz, preferably in the range from 24 to 30 kHz.

5. Method according to Claim 1, **characterized in that** the machining takes place by milling.

6. Method according to one of Claims 1 to 5, **characterized in that**, in step f), the mounting location (50) for the respective connecting element (18) is determined on the spectacle lens (2, 4) by means of the opening (86) of the mask (84).

7. Method according to one of Claims 1 to 6, **characterized in that**, in step h), the connecting element (18) is adhesively bonded to the spectacle lens (2, 4) while the mask (84) is fixed in a releasable manner on the spectacle lens (2, 4), wherein the connecting element (18) is placed on the spectacle lens (2, 4) in the region bounded by the opening (86) of the mask (84), which is fixed on the spectacle lens (2, 4), and is adhesively bonded to the spectacle lens (2, 4) in the resulting position relative to the same.

8. Method according to Claim 7, **characterized in that** an adhesive is introduced in a metered amount between the joining areas (56) on the spectacle lens (2, 4) and on the connecting element (18), once the connecting element (18) has been placed on the spectacle lens (2, 4).

9. Method according to one of Claims 1 to 8, **characterized in that** the applied coating (32) comprises at least a hard layer (36) and a dirt-repelling layer (40).

10. Method according to Claim 9, **characterized in that** the applied coating (32) also comprises an antireflection layer (38) or a reflective layer.

11. Method according to one of Claims 1 to 10, **characterized in that** the coating (32) is removed at the mounting locations (50) up to the entire thickness of the coating (32).

12. Method according to one of Claims 1 to 11, **characterized in that** the joining area of a respective connecting element (18) has substantially a rectangular shape.

13. Method according to one of Claims 1 to 12, **characterized in that**, before step h), the joining area of the respective connecting element (18) is roughened.

14. Method according to one of Claims 1 to 12, **characterized in that**, before step h), the joining area of the respective connecting element (18) is treated with acetone.

15. Method according to one of Claims 1 to 14, **characterized in that** a cyanoacrylate adhesive is used as the adhesive for the adhesive bonding.

16. Method according to one of Claims 1 to 15, **characterized in that** the lugs (12, 14) and the bridge (6) are each produced from a main body (16) and the connecting element (18) or the connecting elements (18), wherein the main body (16) is produced from a material different to the material of the connecting element (18) or of the connecting elements (18).

17. Method according to Claim 16, **characterized in that** the connecting elements (18) are produced from a flexible plastic with low hardness.

18. Method according to Claim 17, **characterized in that** the hardness of the plastic lies in the range from 40 to 60 Shore D.

19. Method according to Claim 17 or 18, **characterized in that** the plastic is an aliphatic, thermoplastic polyether-polyurethane.

20. Method according to one of Claims 16 to 19, **characterized in that** the main body (16) and the respective connecting element (18) are produced separately and are connected to each other by force- or form-fitting engagement.

21. Method according to one of Claims 17 to 19, **characterized in that** each connecting element (18) is connected to the associated main body (16) by the connecting element (18) being moulded on in an injection-moulding process.

22. Method according to one of Claims 16 to 21, **characterized in that** the main body (16) is produced from metal.

23. Method according to one of Claims 16 to 21, **characterized in that** the main body (16) is produced from a plastic.

24. Method according to one of Claims 1 to 15, **characterized in that** each lug, including the connecting element thereof, is produced in one piece from a plastic, and **in that** the bridge, including the connecting elements thereof, is produced in one piece from a plastic.

## Revendications

1. Procédé de fabrication d'une paire de lunettes sans cercles,
ladite paire de lunettes comportant
deux verres de lunettes (2, 4), un pont (6) disposé entre les deux verres de lunettes (2, 4) et qui relie les deux verres de lunettes (2, 4) l'un à l'autre,
deux tenons (12, 14), respectivement reliés à un des deux verres de lunettes (2, 4) sur une zone de bord distante du pont (6) du verre de lunettes, et
deux branches (15), respectivement reliées de manière articulée à un des deux tenons (12, 14),
ledit procédé comportant les étapes suivantes :
a) fabrication de deux verres de lunettes bruts (42) à partir d'une matière synthétique ;
b) application d'un revêtement (32) sur la face avant (3) et la face arrière des verres de lunettes bruts (42) ;
c) traitement des verres de lunettes bruts (42) de manière à obtenir les deux verres de lunettes (2, 4) avec une forme de verre (46) souhaitée ;
d) fabrication des deux tenons (12, 14), chacun des tenons présentant un élément de connexion (18) avec une surface d'assemblage pour le raccordement du tenon (12, 14) à un des deux verres de lunettes (2, 4) ;
e) fabrication du pont (6), ledit pont présentant deux éléments de connexion (18) avec une surface d'assemblage pour le raccordement du pont aux deux verres de lunettes (2, 4) ;
f) définition des emplacements d'application (50) pour les éléments de connexion (18) des tenons (12, 14) et du pont (6) sur la face avant (3) ou la face arrière des verres de lunettes (2, 4) ;
g) retrait du revêtement (32) sur les emplacements d'application (50) pour former des surfaces d'assemblage (56) sur les verres de lunettes (2, 4) ; et
h) collage des éléments de connexion (18), des tenons (12, 14) et du pont (6) aux emplacements d'application (50) sur la face avant (3) ou la face arrière des verres de lunettes (2, 4),
**caractérisé**
**en ce que** préalablement à l'étape g), un masque (84) pourvu d'une ouverture (86), dont le contour (90) correspond au moins partiellement au tracé (23) de la surface d'assemblage de l'élément de connexion (18), est fixé de manière amovible contre les verres de lunettes (2, 4), pour chacun des éléments de connexion (18),
et cela de telle manière que l'ouverture (86) du masque (84) se trouve sur l'emplacement d'application (50) pour l'élément de connexion (18), et y délimite la surface d'assemblage (56) à former sur le verre de lunettes (2, 4), et
**en ce qu'**en étape g), le revêtement (32) est retiré par usinage avec enlèvement de matière de la face avant (3) ou de la face arrière du verre de lunettes (2, 4) dans la zone délimitée par l'ouverture (86) du masque (84) fixé de manière amovible contre le verre de lunettes (2, 4).

2. Procédé selon la revendication 1, **caractérisé en ce que** l'usinage avec enlèvement de matière est réalisé par polissage.

3. Procédé selon la revendication 2, **caractérisé en ce que** l'usinage avec enlèvement de matière est réalisé au moyen d'un outil à polir (54).

4. Procédé selon la revendication 3, **caractérisé en ce que** l'outil à polir (54) effectue un mouvement rotatoire ou un mouvement de va-et-vient à haute fréquence, avec une fréquence comprise entre 15 et 40 kHz, préférentiellement comprise entre 24 et 30 kHz.

5. Procédé selon la revendication 1, **caractérisé en ce que** l'usinage avec enlèvement de matière est réalisé par fraisage.

6. Procédé selon l'une des revendications 1 à 5, **caractérisé en ce qu'**en étape f), l'emplacement d'application (50) pour l'élément de connexion (18) respectif est défini sur le verre de lunettes (2, 4) au moyen de l'ouverture (86) du masque (84).

7. Procédé selon l'une des revendications 1 à 6, **caractérisé en ce qu'**en étape h), l'élément de connexion (18) est collé au verre de lunettes (2, 4) tandis que le masque (84) est fixé de manière amovible contre le verre de lunettes (2, 4), l'élément de connexion (18) étant mis en place contre le verre de lunettes (2, 4) dans la zone délimitée par l'ouverture (86) du masque (84), et étant collé au verre de lunettes (2, 4) dans la position relative ainsi définie par rapport audit verre de lunettes (2, 4).

8. Procédé selon la revendication 7, **caractérisé en ce qu'**un adhésif est appliqué en quantité dosée entre les surfaces d'assemblage (56) sur le verre de lunettes (2, 4) et sur l'élément de connexion (18), après la mise en place de l'élément de connexion (18) contre le verre de lunettes (2, 4).

9. Procédé selon l'une des revendications 1 à 8, **caractérisé en ce que** le revêtement (32) appliqué comprend au moins une couche dure (36) et une couche anti-salissure (40).

10. Procédé selon la revendication 9, **caractérisé en ce que** le revêtement (32) appliqué comprend en outre une couche anti-reflets (38) ou une couche réfléchissante.

11. Procédé selon l'une des revendications 1 à 10, **caractérisé en ce que** le revêtement (32) est retiré aux emplacements d'application (50) jusqu'à l'épaisseur totale dudit revêtement (32).

12. Procédé selon l'une des revendications 1 à 11, **caractérisé en ce que** la surface d'assemblage d'un élément de connexion (18) correspondant a sensiblement une forme rectangulaire.

13. Procédé selon l'une des revendications 1 à 12, **caractérisé en ce que** préalablement à l'étape h), la surface d'assemblage de chaque élément de connexion (18) est rugosifiée.

14. Procédé selon l'une des revendications 1 à 12, **caractérisé en ce que** préalablement à l'étape h), la surface d'assemblage de chaque élément de connexion (18) est traitée avec de l'acétone.

15. Procédé selon l'une des revendications 1 à 14, **caractérisé en ce qu'**une colle cyanoacrylate est utilisée comme adhésif pour le collage.

16. Procédé selon l'une des revendications 1 à 15, **caractérisé en ce que** les tenons (12, 14) et le pont (6) sont fabriqués respectivement à partir d'un corps de base (16) et de l'élément de connexion (18) ou des éléments de connexion (18), le corps de base (16) étant fabriqué à partir d'un autre matériau que le matériau de l'élément de connexion (18) ou des éléments de connexion (18).

17. Procédé selon la revendication 16, **caractérisé en ce que** les éléments de connexion (18) sont fabriqués à partir d'une matière synthétique flexible de faible dureté.

18. Procédé selon la revendication 17, **caractérisé en ce que** la dureté de la matière synthétique est comprise entre 40 et 60 Shore D.

19. Procédé selon la revendication 17 ou la revendication 18, **caractérisé en ce que** la matière synthétique est un polyéther-polyuréthane aliphatique thermoplastique.

20. Procédé selon l'une des revendications 16 à 19, **caractérisé en ce que** le corps de base (16) et l'élément de connexion (18) correspondant sont fabriqués séparément et assemblés l'un à l'autre par connexion par adhérence ou par accouplement mécanique.

21. Procédé selon l'une des revendications 17 à 19, **caractérisé en ce que** chaque élément de connexion (18) est assemblé au corps de base (16) correspondant par injection de l'élément de connexion (18) au moyen d'un procédé de moulage par injection.

22. Procédé selon l'une des revendications 16 à 21, **caractérisé en ce que** le corps de base (16) est fabriqué en métal.

23. Procédé selon l'une des revendications 16 à 21, **caractérisé en ce que** le corps de base (16) est fabriqué à partir d'une matière synthétique.

24. Procédé selon l'une des revendications 1 à 15, **caractérisé en ce que** chaque tenon, y compris son élément de connexion, est fabriqué d'une seule pièce à partir d'une matière synthétique, et **en ce que** le pont, y compris ses éléments de connexion, est fabriqué d'une seule pièce à partir d'une matière synthétique.
